# EUROPÄISCHE PATENTSCHRIFT

(11) **EP 0 645 401 B1**
(45) Veröffentlichungstag und Bekanntmachung des Hinweises auf die Patenterteilung: **05.12.2001**
(21) Anmeldenummer: 94114431.3
(22) Anmeldetag: 14.09.1994
(51) Int. Cl.: C08F 10/06, C08F 4/642, C07F 17/00

(54) **Verfahren zur Herstellung von Polyolefinen**
Process for producing polyolefins
Procédé de préparation de polyoléfines

(30) Priorität: 29.09.1993 DE 4333128
(43) Veröffentlichungstag der Anmeldung: 29.03.1995
(73) Patentinhaber: Basell Polyolefine GmbH, 67056 Ludwigshafen (DE)
(72) Erfinder: Winter, Andreas, Dr., D-61479 Glashütten (DE); Spaleck, Walter, Dr., D-65835 Liederbach (DE); Bachmann, Bernd, Dr., D-65817 Eppstein (DE)

(56) Entgegenhaltungen:
- EP-A- 0 516 018
- WO-A-92/15619
- US-A- 4 939 217

## Beschreibung

Die Erfindung bezieht sich auf ein Verfahren zur Herstellung von Polyolefinen mit breiter Molmassenverteilung und hohem Molekulargewicht.

Von Metallocenkatalysatoren in Verbindung mit Aluminoxanen ist bekannt, daß sie Olefine zu Polyolefinen mit enger Molmassenverteilung (M_{w}/Mₙ von 2-3) polymerisieren können (J. Polym. Sci, Pol. Chem. Ed. 23 (1985) 2117; EP-A 302 424). Solche eng verteilten Polyolefine eignen sich beispielsweise für Anwendungen im Präzisionsspritzguß, Spritzguß allgemein und für die Faserherstellung. Für zahlreiche Anwendungen wie beispielsweise Tiefziehen, Extrudieren, Hohlkörperblasformen sowie für die Herstellung von Polyolefinschäumen und Folien werden breitere oder bimodale Molmassenverteilungen gefordert.

Für Polyethylen wurde vorgeschlagen, solche Produkte durch Verwendung von zwei oder mehr Metallocenkatalysatoren bei der Polymerisation zu realisieren (EP-A 128 045); die beschriebenen Systeme sind jedoch achirale Katalysatoren und würden bei der Polymerisation von Propen ataktisches Polypropylen liefern. Ataktisches Polypropylen ist als Konstruktionswerkstoff jedoch ungeeignet.

Die Herstellung von Stereoblockpolypropylen mit M_{w}/Mₙ von 13-15 ist aus DE-OS 3 640 924 bekannt. Diese Katalysatorsysteme sind ebenfalls nicht geeignet, Polyolefine hoher Taktizität zu bilden. Ferner sind die bei technisch relevanten Polymerisationstemperaturen realisierbaren Aktivitäten der Metallocene und die Molmassen der Polymerprodukte zu gering. Darüberhinaus liefern die vorgeschlagenen Katalysatoren bei solchen Polymerisationstemperaturen nur ataktisches Polymer.

In der EP-A 310 734 werden Katalysatorsysteme bestehend aus einer Mischung eines Hafnocens und eines Zirkonocens zur Herstellung von Polypropylen vorgeschlagen. Die Produkte haben breite bis bimodale Verteilungen mit M_{w}/Mₙ von 3,7 bis 10,3.

Unter Verwendung nur eines Hafnocenkatalysators wird bei einer bestimmten Polymerisationstemperatur gemäß EP-A 355 439 breitverteiltes Polypropylen erhalten.

Syndiotaktisches Polypropylen mit breiter Verteilung wird in der EP-A 387 691 (M_{w}/Mₙ bis 6,4) bei Verwendung eines Hafnocens beschrieben.

Gemeinsame Nachteile dieser Verfahren sind die für industrielle Anwendungen zu hohen Kosten für die Hafniumkatalysatoren in Verbindung mit ihrer niedrigen Polymerisationsaktivität, die zusätzlich eine umfassende kostenintensive Reinigung des hergestellten Polymers von Katalysatorresten (hohe Restaschengehalt) erforderlich macht.

In EP-A-0 516 018 wird die Verwendung von zwei Zirkonocenen zur Herstellung von Polymeren mit breiter Molmassenverteilung beschrieben. Die dort beschriebenen Metallocene besitzen jedoch Defizite in Polymerisationsaktivität und erreichbarer Molmassenhöhe bei technisch relevanten Polymersationstemperaturen über 50° C.

Es bestand somit die Aufgabe, ein Katalysatorsystem und ein Verfahren zu finden, mittels dessen Polyolefine mit breiter, bimodaler oder multimodaler Verteilung hergestellt werden können, welches die aus dem Stand der Technik bekannten Nachteile vermeidet.

Insbesondere sollte das neue Verfahren die aufgrund niedriger Polymerisationsaktivitat auftretenden hohen Restaschegehalte vermeiden und die Herstellung von hochmolekularen Polymerformmassen ermöglichen, die beispielsweise für die Produktion von gepreßten Platten oder extrudierten Platten und Rohren sowie für das Hohl- und Großhohlkörperblasformen benötigt werden. Bevorzugte Einsatzgebiete für solche Polymere mit geringer Fließfähigkeit sind beispielsweise blasgeformte Koffer mit Filmscharnieren, Konturverpackungen, Stanzplatten, Heißwasserbehälter, Abwasser- und Heißwasserrohre, Druckrohre, Filterplatten, Wärmetauscher, Vollstäbe oder Kfz-Teile wie Bremsflüssigkeits- und Kühlwasserbehälter. Im Bereich der Folienanwendungen werden solche Formmassen für reißfeste BOPP-Folien verwendet.

Überraschend wurde gefunden, daß die Nachteile des Standes der Technik vermieden werden können, durch Verwendung eines Katalysatorsystems bestehend aus mindestens zwei stereorigiden Zirkonocenen, von denen mindestens eines am Sechsring substituierte Indenylliganden aufweist, und einer Aluminiumverbindung als Cokatalysator.

Die Erfindung betrifft somit ein Verfahren zur Herstellung eines Polyolefins mit einer Molmassenverteilung M_{w}/Mₙ ≥ 3,0, die monomodal, bimodal oder multimodal sein kann, durch Polymerisation oder Copolymerisation eines Olefins der Formel R^{a}CH=CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen ein Ringsystem bilden können, bei einer Temperatur von 50 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan der Formel II 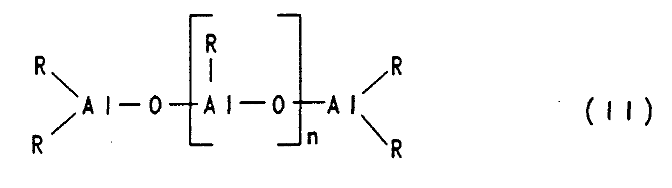 für den linearen Typ und/oder der Formel III 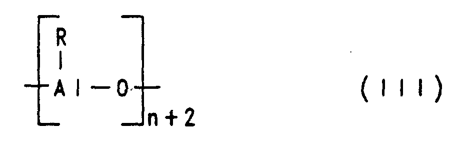 für den cyclischen Typ, wobei in den Formeln II und III die Reste R gleich oder verschieden sein können und eine C₁-C₆-Alkylgruppe, eine C₁-C₆-Fluoralkylgruppe, eine C₆-C₁₈-Arylgruppe, eine C₁-C₆-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AlR₃ besteht, dadurch gekennzeichnet, daß als Übergangsmetallkomponente mindestens ein Zirkonocen der Formel I und mindestens ein Zirkonocen der Formel la oder alternativ mindestens 2 Zirkonocene der Formel I verwendet werden, 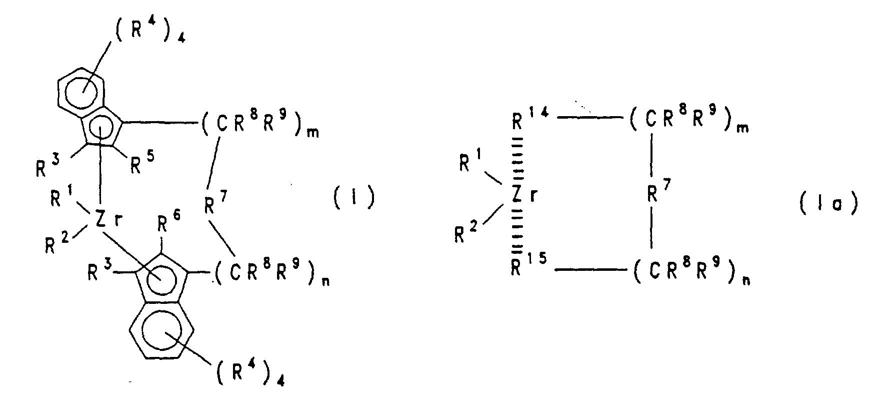 , worin
- R¹ und R²: gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
- R³: Wasserstoff, ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
- R⁴: gleich oder verschieden sind und ein Wasserstoffatom, ein Halogenatom, eine C₁-C₂₀-Alkylgruppe, eine C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist, wobei mindestens ein Rest R⁴ pro Indenyring von Wasserstoff verschieden ist, oder zwei oder mehr Reste R⁴ ein Ringsystem mit den sie verbindenden Atomen bilden,
- R⁵ und R⁶: gleich oder verschieden sind und ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
- R⁷: 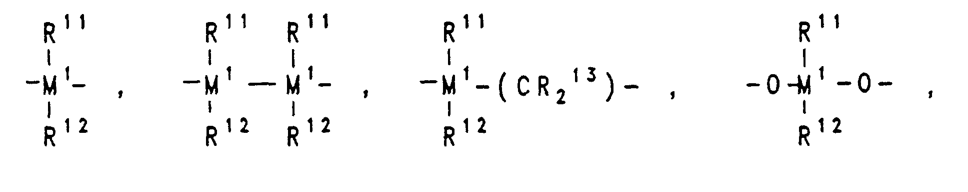 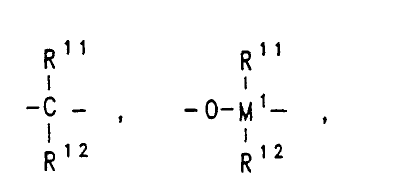 =BR¹¹, =AlR¹¹, -Ge-, -Sn-, -O-, -S-, =SO, =SO₂, =NR¹¹, =CO, =PR¹¹ oder =P(O)R¹¹ ist,
- wobei R¹¹, R¹² und R¹³: gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
- M¹: Silizium, Germanium oder Zinn ist,
- R⁸ und R⁹: gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁸ und R⁹ jeweils mit den sie verbindenden Atomen einen Ring bilden,
- R¹⁴ und R¹⁵: gleich oder verschieden sind und einen ein- oder mehrkernigen Kohlenwasserstoffrest, welcher mit dem Zirkonatom eine Sandwichstruktur bilden kann, bedeuten
- m und n: gleich oder verschieden sind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ ist Wasserstoff, ein Halogenatom, bevorzugt ein Fluor-, Chlor- oder Bromatom, eine C₁-C₁₀-, vorzugsweise C₁-C₄-Alkylgruppe, die halogeniert sein kann, eine C₆-C₁₀-, vorzugsweise C₆-C₈-Arylgruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe, einen -NR₂¹⁰, -SR¹⁰, -OSiR₃¹⁰, -OR¹⁰, -SiR₃¹⁰ oder -PR₂¹⁰-Rest, worin R¹⁰ ein Halogenatom, vorzugsweise Chloratom, oder eine C₁-C₁₀-, vorzugsweise C₁-C₃-Alkylgruppe oder C₆-C₁₀-, vorzugsweise C₆-C₈-Arylgruppe ist, besonders bevorzugt ist R³ Wasserstoff.

Die Reste R⁴ sind gleich oder verschieden und bedeuten ein Wasserstoffatom, ein Halogenatom, eine C₁-C₂₀-, vorzugsweise C₁-C₁₀-Alkylgruppe, eine C₁-C₂₀-Fluoralkylgruppe, vorzugsweise C₁-C₁₀-Fluoralkyl-Gruppe, eine C₆-C₃₀-, vorzugsweise C₆-C₂₀-Arylgruppe, eine C₆-C₃₀-Fluorarylgruppe, vorzugsweise eine C₆-C₂₀-Fluorarylgruppe, eine C₁-C₂₀-, vorzugsweise C₁-C₁₀-Alkoxygruppe, eine C₂-C₂₀-, vorzugsweise C₂-C₁₀-Alkenylgruppe, eine C₇-C₄₀-, vorzugsweise C₇-C₂₀-Arylalkylgruppe, eine C₈-C₄₀-, vorzugsweise C₈-C₂₂-Arylalkenylgruppe oder eine C₇-C₄₀-, vorzugsweise C₇-C₂₂-Alkylarylgruppe, einen -NR₂¹⁰, -SR¹⁰, -OSiR₃¹⁰, -OR¹⁰, -SiR₃¹⁰ oder -PR₂¹⁰-Rest, worin R¹⁰ ein Halogenatom, vorzugsweise Chloratom, oder eine C₁-C₁₀-, vorzugsweise C₁-C₃-Alkylgruppe oder C₆-C₁₀-, vorzugsweise C₆-C₈-Arylgruppe ist, wobei mindestens ein Rest R⁴ pro Indenylring von Wasserstoff verschieden ist, oder zwei oder mehr Reste R⁴ ein Ringsystem mit den sie verbindenden Atomen bilden, welches ein- oder mehrkernig ist.

R⁵ und R⁶ sind gleich oder verschieden und bedeuten, ein Halogenatom, bevorzugt ein Fluor-, Chlor- oder Bromatom, eine C₁-C₁₀-, vorzugsweise C₁-C₄-Alkylgruppe, die halogeniert sein kann, eine C₆-C₁₀-, vorzugsweise C₆-C₈-Arylgruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe, einen -NR₂¹⁰, -OSiR₃¹⁰, -OR¹⁰, -SiR₃¹⁰ oder -PR₂¹⁰-Rest, worin R¹⁰ ein Halogenatom, vorzugsweise Chloratom, oder eine C₁-C₁₀-, vorzugsweise C₁-C₃-Alkylgruppe oder C₆-C₁₀-, vorzugsweise C₆-C₈-Arylgruppe ist.

R⁷ ist 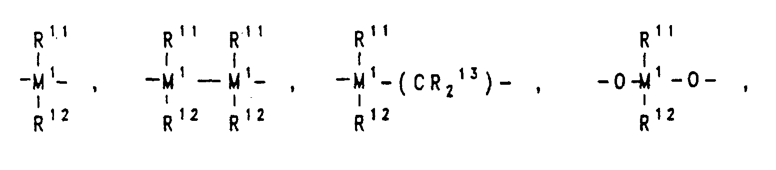 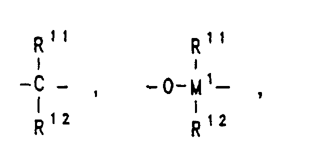 =BR¹¹, =AlR¹¹, -Ge-, -Sn-, -O-, -S-, =SO, = SO₂, =NR¹¹, =CO, =PR¹¹ oder =P(O)R¹¹,
wobei R¹¹, R¹² und R¹³ gleich oder verschieden sind und ein Wasserstoffatom, ein Halogenatom, eine C₁-C₂₀-, vorzugsweise C₁-C₁₀-Alkylgruppe, eine C₁-C₂₀-Fluoralkylgruppe, vorzugsweise C₁-C₁₀-Fluoralkylgruppe, eine C₆-C₃₀-, vorzugsweise C₆-C₂₀-Arylgruppe, eine C₆-C₃₀-Fluorarylgruppe, vorzugsweise eine C₆-C₂₀-Fluorarylgruppe, eine C₁-C₂₀-, vorzugsweise C₁-C₁₀-Alkoxygruppe, eine C₂-C₂₀-, vorzugsweise C₂-C₁₀-Alkenylgruppe, eine C₇-C₄₀-, vorzugsweise C₇-C₂₀-Arylalkylgruppe, eine C₈-C₄₀-, vorzugsweise C₈-C₂₂-Arylalkenylgruppe oder eine C₇-C₄₀-, vorzugsweise C₇-C₂₂-Alkylarylgruppe bedeuten, oder R¹¹ und R¹² oder R¹¹ und R¹³ bilden jeweils zusammen mit den sie verbindenden Atomen einen Ring.
M¹ ist Silizium, Germanium oder Zinn, bevorzugt Silizium und Germanium.
R⁷ ist vorzugsweise =CR¹¹R¹², =SiR¹¹R¹², =GeR¹¹R¹², -O-, -S-, =SO, =PR¹¹ oder =P(O)R¹¹.
R⁸ und R⁹ sind gleich oder verschieden und sind ein Wasserstoffatom, ein Halogenatom, eine C₁-C₂₀-, vorzugsweise C₁-C₁₀-Alkylgruppe, eine C₁-C₂₀-Fluoralkylgruppe, vorzugsweise C₁-C₁₀-Fluoralkylgruppe, eine C₆-C₃₀-,
vorzugsweise C₆-C₂₀-Arylgruppe, eine C₆-C₃₀-Fluorarylgruppe, vorzugsweise eine C₆-C₂₀-Fluorarylgruppe, eine C₁-C₂₀-, vorzugsweise C₁-C₁₀-Alkoxygruppe, eine C₂-C₂₀-, vorzugsweise C₂-C₁₀-Alkenylgruppe, eine C₇-C₄₀-, vorzugsweise C₇-C₂₀-Arylalkylgruppe, eine C₈-C₄₀-, vorzugsweise C₈-C₂₂-Arylalkenylgruppe oder eine C₇-C₄₀-, vorzugsweise C₇-C₂₂-Alkylarylgruppe bedeuten, oder R⁸ und R⁹ bilden jeweils zusammen mit den sie verbindenden Atomen einen Ring.

m und n sind gleich oder verschieden und bedeuten null, 1 oder 2, bevorzugt null oder 1, wobei m plus n null, 1 oder 2, bevorzugt null oder 1 ist.

Bevorzugt sind R¹⁴ und R¹⁵ Fluorenyl, Indenyl und Cyclopentadienyl, wobei diese Grundkörper noch zusätzliche Substituenten in der Bedeutung von R⁴ tragen können. Im Falle eines Indenylgrundkörpers darf der Sechsring jedoch keine Substituenten enthalten, die von Wasserstoff verschieden sind, falls der Fünfring in 2-Stellung (benachbart zur Brücke -(CR⁸R⁹)ₘ-R⁷-(CR⁸R⁹)-) einen von Wasserstoff verschiedenen Rest R⁵ bzw. R⁶ trägt.

Somit sind die besonders bevorzugten Metallocene solche, bei denen in Formel I, R¹ und R² gleich oder verschieden sind und Methyl oder Chlor, R³ Wasserstoff, und R⁷ einen Rest 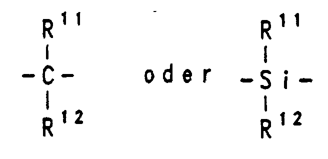 und n plus m null oder 1 bedeutet; insbesondere solche Verbindungen der Formel I, bei denen die Indenylreste in 2,4-, 2,5-, 2,4,6-, 2,4,5-, 2,4,5,6- und 2,5,6-Stellung substituiert sind, wie z.B.:
Dimethylsilandiylbis(2-methyl-4-phenyl-1-indenyl)ZrCl₂
Phenyl(Methyl)silandiylbis(2-methyl-4-phenyl-1-indenyl)ZrCl₂
Dimethylsilandiylbis(2-methyl-4-(1-naphthyl)-1-indenyl)ZrCl₂
Dimethylsilandiylbis(2-methyl-4-(2-naphthyl)-1-indenyl)ZrCl₂
Dimethylsilandiylbis(2-ethyl-4-(1-naphthyl)-1-indenyl)ZrCl₂
Dimethylsilandiylbis(2-methyl-4,6-diisopropyl-1-indenyl)ZrCl₂
Dimethylsilandiylbis(2,4,6-trimethyl-1-indenyl)ZrCl₂
Phenyl(Methyl)silandiylbis(2-methyl-4,6-diisopropyl-1-indenyl)ZrCl₂
Pheny(Methyl)silandiylbis(2,4,6-trimethy(-1-indenyl)ZrCl₂
1,2-Ethandiylbis(2-methyl-4,6-diisopropyl-1-indenyl)ZrCl₂
1,2-Butandiylbis(2-methyl-4,6-diisopropyl-1-indenyl)ZrCl₂
Dimethylsilandiylbis(2-methyl4-ethyl-1-indenyl)ZrCl₂
Dimethylsilandiylbis(2-methyl-4-isopropyl-1-indenyl)ZrCl₂
Dimethylsilandiylbis(2-methyl-4-t-butyl-1-indenyl)ZrCl₂
Phenyl(Methyl)silandiylbis(2-methyl-4-isopropyl-1-indenyl)ZrCl₂
Dimethylsilandiylbis(2-ethyl-4-methyl-1-indenyl)ZrCl₂
Dimethylsilandiylbis(2,4-dimethyl-1-indenyl)ZrCl₂
Dimethylsilandiylbis(2-methyl-4-ethyl-1-indenyl)ZrCl₂
Dimethylsilandiylbis(2-methyl-α-acenaphth-1-indenyl)ZrCl₂
Phenyl(Methyl)silandiylbis(2-methyl-4,5-benzo-1-indenyl)ZrCl₂
Phenyl(Methyl)silandiylbis(2-methyl-α-acenaphth-1-indenyl)ZrCl₂
1,2-Ethandiylbis(2-methyl-4,5-benzo-1-indenyl)ZrCl₂
1,2-Butandiylbis(2-methyl-4,5-benzo-1-indenyl)ZrCl₂
Dimethylsilandiylbis(2-methyl-4,5-benzo-1-indenyl)ZrCl₂
1,2-Butandiylbis(2-ethyl-4-phenyl-1-indenyl)-ZrCl₂
Dimethylsilandiylbis(2-ethyl-4-phenyl-1-indenyl)ZrCl₂
Dimethylsilandiylbis(2-methyl-5-isobutyl-1-indenyl)ZrCl₂
Phenyl(Methyl)silandiylbis(2-methyl-5-isobutyl-1-indenyl)ZrCl₂
Dimethylsilandiylbis(2-methyl-5-t-butyl-1-indenyl)ZrCl₂
Dimethylsilandiylbis(2,5,6-trimethyl-1-indenyl)ZrCl₂
und die in den Ausführungsbeispielen aufgeführten Verbindungen.

Die besonders bevorzugten Metallocene der Formel la sind solche bei denen R¹ und R² gleich oder verschieden sind und Methyl oder Chlor,
R⁷ einen Rest 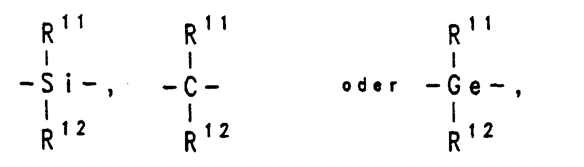
n+m null oder 1 und
R¹⁴ und R¹⁵ gleich oder verschieden sind und Fluorenyl, Indenyl oder ein substituiertes Cyclopentadienyl bedeuten. Ganz besonders bevorzugte Verbindungen der Formel la sind die in den Ausführungsbeispielen aufgeführten Verbindungen.

Besondere Bedeutung besitzen somit rac-Phenyl(methyl)silyl(indenyl)₂-zirkondichlorid, Diphenylmethylen(9-fluorenyl)(cyclopentadienyl)zirkondichlorid, Phenyl(Methyl)methylen(9-fluorenyl)(cyclopentadienyl)zirkondichlorid, Isopropyliden(9-fluorenyl)(cyclopentadienyl)zirkondichlorid, rac-Dimethylsilyl(2,3,5-trimethyl-1-cyclopentadienyl)₂zirkondichlorid, rac-Dimethylsilyl(indenyl)2-zirkondichlorid, rac-Dimethylgermyl(indenyl)₂zirkondichlorid, rac-Dimethylsilyl(indenyl)₂zirkondimethyl, rac-Phenyl(vinyl)silyl(indenyl)₂zirkondichlorid, rac-Phenyl(vinyl)silyl(indenyl)₂zirkondimethyl, 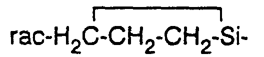 (indenyl)₂zirkondichlorid, rac-Dimethylsilyl(2,4-dimethylcyclopentadienyl)₂zirkondichlorid, rac-Diphenylsilyl(2,4-dimethyl-1-cyclopentadienyl)zirkondichlorid, rac-lsopropyliden(indenyl)₂-zirkondichlorid, rac-Dimethylsilyl(2-methyl-4,5,6,7-tetrahydro-1-indenyl)₂-zirkondichlorid, rac-Ethylen(indenyl)₂-zirkondichlorid, rac-Methylen(3-t-butyl-1-cyclopentadienyl)₂-zirkondichlorid, rac-Dimethylsilyl(4,7-dimethyl-1-indenyl)₂-zirkondichlorid, rac-Dimethylsilyl(2-methyl-1-indenyl)₂zirkondichlorid, rac-Phenyl(Methyl)silyl(2-methyl-1-indenyl)zirkondichlorid, rac-Dimethylsilyl(2-ethyl-1-indenyl)₂-zirkondichlorid, rac-Dimethylsilyl(4,5-benzo-1-indenyl)₂zirkondichlorid und rac-Dimethylsilyl(4-phenyl-1-indenyl)2zirkondichlorid.

Metallocene mit C₅-Symmetrie (beispielsweise R¹¹R¹²C(Fluorenyl)-(Cyclopentadienyl)zirkondimethyl) können zur Herstellung von syndiotaktischem Anteil im Polyolefin eingesetzt werden.

Der Begriff Cₛ-Symmetrie bedeutet für die Zwecke der vorliegenden Erfindung, daß die entsprechenden Metallocene senkrecht zur Ebene, die von Zr, R¹ und R² aufgespannt wird, eine Spiegelebene besitzen. Die Winkelhalbierende von R¹-Zr-R² verläuft in dieser Spiegelebene. Diese Symmetriebetrachtung beschränkt sich auf einen Teil des Zirconocenmoleküls, d.h. die Brücke -(CR⁸R⁹)ₙ-R⁷-(CR⁸R⁹)ₘ- wird nicht berücksichtigt. Ferner ist der Begriff Cₛ-Symmetrie formal oder idealisiert zu verstehen. So bleiben z.B. Verschiebungen im genannten Molekülteil, die durch die Brücke hervorgerufen werden können und nur einer Strukturaufklärung zugänglich sind, für die Zwecke der vorliegenden Erfindung außer Betracht.

Die chiralen Metallocene werden als Racemat zur Herstellung von hochisotaktischen Polyolefinen eingesetzt. Verwendet werden kann aber auch die reine R- oder S-Form. Mit diesen reinen stereoisomeren Formen ist ein optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die Metallocene I und la können prinzipiell nach folgendem Reaktionsschema hergestellt werden: 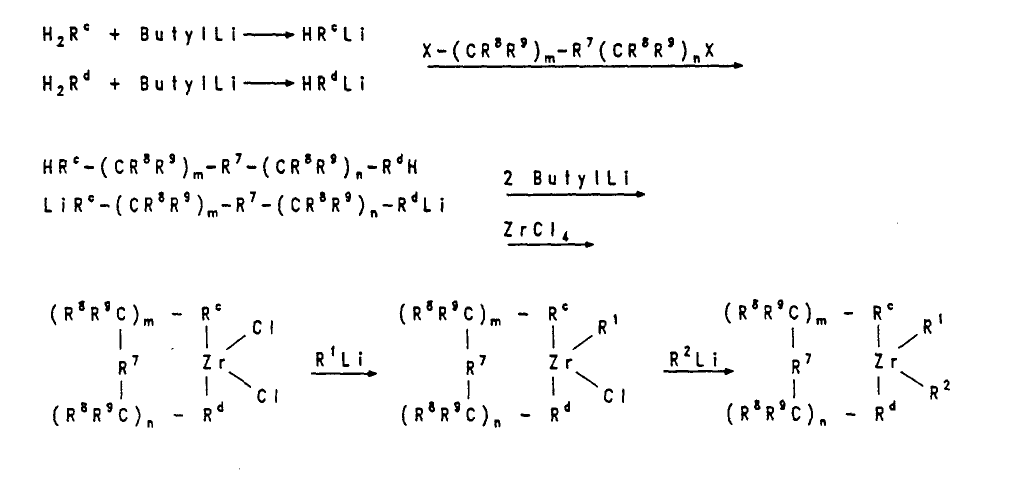 X = Cl, Br, I, O-Tosyl; 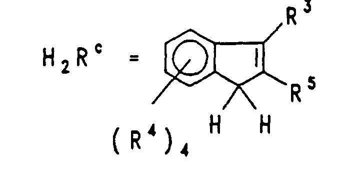 fuer I oder H₂R¹⁴ fuer Ia 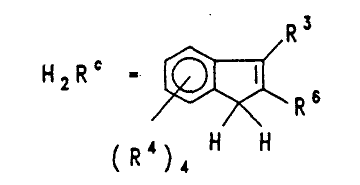 fuer I oder H₂R¹⁵ fuer Ia
oder 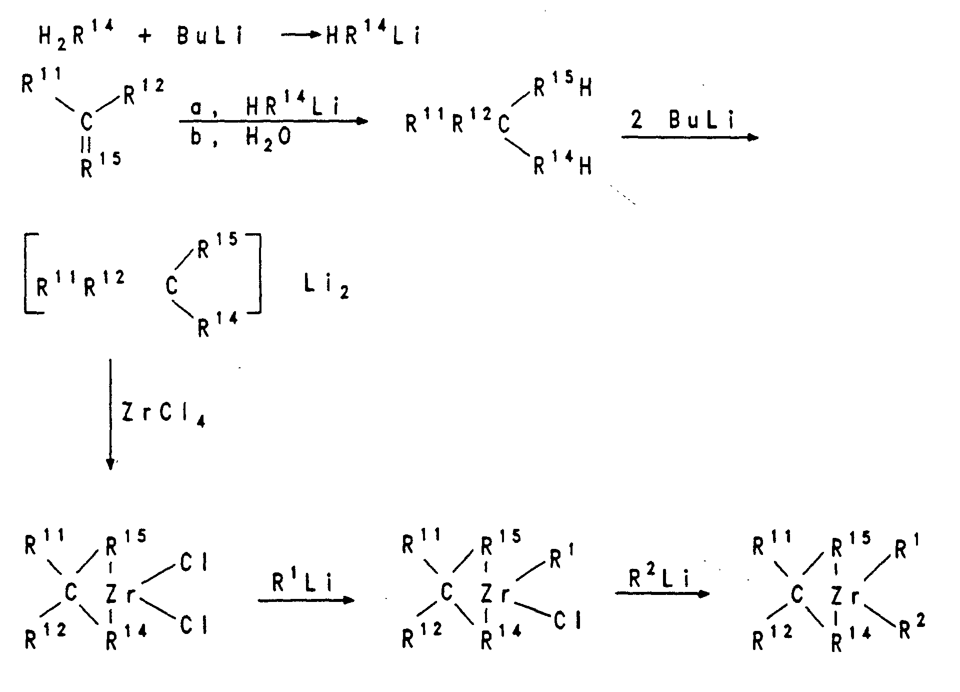 (vgl. Journal of Organomet. chem. (1985) 63-67 und EP-A 320762).

Die Auswahl der Metallocene für die Polymerisation von Olefinen zu breit- oder mehrmodal verteiltem Polyolefin kann durch jeweils eine Testpolymerisation pro Metallocen erfolgen.

Dabei wird das Olefin zum Polyolefin polymerisiert und dessen mittleres Molekulargewicht M_{w} sowie dessen Molmassenverteilung M_{w}/Mₙ mittels Gelpermeationschromatographie bestimmt. Je nach gewünschter Molmassenverteilung werden dann die Metallocene kombiniert.

Unter Einbezug der Polymerisationsaktivitäten ist man mittels Computersimulation der kombinierten Gelpermeationskurven ohne weiteres in der Lage, über die Art der Metallocene und über das Mengenverhältnis der Metallocene untereinander, jede gewünschte Molmassenverteilung einzustellen.

Die Zahl der in dem erfindungsgemäßen Verfahren zu verwendenden Zirkonocene beträgt bevorzugt 2 oder 3, insbesondere 2. Es kann jedoch auch eine größere Anzahl verschiedener Zirkonocene (wie z.B. 4 oder 5) der Formeln I und la eingesetzt werden.

Unter Einbeziehung der Polymerisationsaktivitäten und Molmassen bei unterschiedlichen Polymerisationstemperaturen, in Gegenwart von Wasserstoff als Molmassenregler oder in Gegenwart von Comonomeren, kann das Rechensimulationsmodell noch weiter verfeinert und die Anwendbarkeit des erfindungsgemäßen Verfahrens noch verbessert werden.

Als Cokatalysator wird ein Aluminoxan der Formel II und/oder III verwendet, wobei n eine ganze Zahl von 0 - 50, bevorzugt 10 - 35, bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind. Statt des Aluminoxans kann bei der Polymerisation als Cokatalysator eine Mischung bestehend aus Aluminoxan und AlR₃ verwendet werden, wobei R die oben angeführte Bedeutung hat, zusätzlich kann R in diesem Falle auch Ethyl sein.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle (AlR₃ + AlR'₃) mit Wasser umgesetzt (vgl. S. Pasynkiewicz, Polyhedron 9 (1990) 429 und EP-A 302 424).

Die genaue Struktur der Aluminoxane II und III ist nicht bekannt (A.R. Barron et al., J. Am. Chem. Soc. 115 (1993) 4971).

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion jeweils getrennt oder zusammen als Mischung mit einem Aluminoxan der Formel (II) und/oder (III) vorzuaktivieren. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein C₆-C₁₀-Kohlenwasserstoff verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von 10⁻⁴ - 1 mol pro mol Aluminoxan eingesetzt. Die Voraktivierungszeit beträgt 1 Minute bis 60 Stunden, vorzugsweise 2 bis 60 Minuten. Man arbeitet bei einer Temperatur von -78°C bis 100°C, vorzugsweise 0 bis 70°C.

Die Metallocene können auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan, Kombinationen von Aluminoxan auf einem Träger wie beispielsweise Silikagel, oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel RₓNH₄₋ₓBR'₄ oder der Formel R₃PHBR'₄ als Cokatalysator verwendet. Dabei sind x = 1,2 oder 3, R= Alkyl oder Aryl, gleich oder verschieden, und R'= Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandener Katalysatorgifte ist eine Reinigung mit einem Aluminiumalkyl, beispielsweise AIMe₃ oder AIEt₃ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein- oder mehrstufig bei einer Temperatur von 50 bis 200°C, vorzugsweise 50 bis 100°C, durchgeführt. Polymerisiert oder copolymerisiert werden Olefine der Formel R^{a}-CH=CH-R^{b}. In dieser Formel sind R^{a} und R^{b} gleich oder verschieden und bedeuten ein Wasserstoffatom oder einen Alkylrest mit 1 bis 14 C-Atomen. R^{a} und R^{b} können jedoch auch mit den sie verbindenden C-Atomen einen Ring bilden. Beispiele für solche Olefine sind Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wasserstoff zugegeben. Unterschiedliche Wasserstoffansprechbarkeit der Metallocene, sowie die Möglichkeit, die Wasserstoffmenge während der Polymerisation zu verändern kann zu einer weiteren gewünschten Verbreiterung der Molmassenverteilung führen.

Der Gesamtdruck im Polymerisationssystem beträgt 0,5 bis 100 bar. Bevorzugt ist die Polymerisation in dem technisch besonders interessanten Druckbereich von 5 bis 64 bar.

Dabei werden die Metallocene in einer Konzentration, bezogen auf das Übergangsmetall, von 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet. Das Aluminiumoxan oder die Mischung Aluminoxan/AlR₃ wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Butan, Pentan, Hexan, Heptan, Decan, Isooctan, Cyclohexan, Methylcyclohexan, genannt.

Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene im technisch interessanten Temperaturbereich zwischen 50 und 100°C mit sehr hoher Polymerisationsaktivität Polymere mit breiter, bimodaler oder multimodaler Molmassenverteilung, sehr hoher Molmasse, hoher Stereospezifität und guter Kornmorphologie erzeugen. Die Metallocenaktivität liegt bei 50 - 60°C Polymerisationstemperatur > 140 kg Polymer/g Kat x h, bevorzugt > 160 kg Polymer/g Kat x h. Bei Polymerisationstemperaturen > 60°C liegt die Metallocenaktivität über 350, bevorzugt über 400 kg Polymer/g Kat x h. Die erfindungsgemäßen Polymere weisen bei Polymerisationstemperaturen von 50-60°C eine VZ > 260, bevorzugt > 360 cm³/g, bei Polymerisationstemperaturen > 60°C liegt die VZ über 200, bevorzugt über 260 cm³/g. Dementsprechend ist die Molmasse M_{w} bei Polymersationstemperaturen über 60°C größer als 200.000 g/mol. M_{w}/Mₙ ist ≥ 3.0, bevorzugt ≥ 4.0. M_{w}/Mₙ ist bevorzugt < 50, besonders bevorzugt < 30.

Die erfindungsgemäßen Polymere eignen sich besonders gut für die Produktion von gepreßten Platten oder extrudierten Platten und Rohren sowie für das Hohl- und Großhohlkörperblasformen. Bevorzugte Einsatzgebiete für solche Polymere mit geringer Fließfähigkeit sind beispielsweise blasgeformte Koffer mit Filmscharnieren, Konturverpackungen, Stanzplatten, Heißwasserbehälter, Abwasser- und Heißwasserrohre, Druckrohre, Filterplatten, Wärmetauscher, Vollstäbe oder Kfz-Teile wie Bremsflüssigkeits- und Kühlwasserbehälter. Im Bereich der Folienanwendungen werden solche Formmassen für reißfeste BOPP-Folien verwendet.

Die nachfolgenden Beispiele sollen die Erfindung näher erläutern.

Es bedeuten
- VZ= Viskositätszahl in cm³/g M_{w}= Molmassengewichtsmittel in g/mol: ermittelt durch
- M_{w}/Mₙ= Molmassendispersität: Gelpermeationschromatographie
- II= Isotaktischer Index (mm + 1/2 mr): ermittelt durch ¹³C-NMR-Spektroskopie

### Beispiele 1-13

Ein trockener 24 dm³-Reaktor wurde mit Propylen gespült und mit 12 dm³ flüssigen Propylen befüllt. Dann wurden 26 cm³ toluolische Methylaluminoxanlösung (entsprechend 35 mmol Al, mittlerer Oligomerisierungsgrad war n = 22) zugegeben, und der Ansatz wurde 10 Minuten bei 30°C gerührt.

Parallel dazu wurden die für die Polymerisation vorgesehenen Metallocene gemischt (Mengen und Metallocenverbindungen siehe Tabelle 1) und in 10 cm³ toluolischer Methylaluminoxanlösung (13 mmol Al) aufgelöst und nach 2 Minuten in den Reaktor gegeben.

Bei der in Tabelle 1 angegebenen Polymerisationstemperatur wurde 1 h polymerisiert und dann mit 12 Ndm³ CO₂Gas die Polymerisationsreaktion gestoppt. Das Polymer wurde 24 h bei 80°C im Vakuum getrocknet.

Die Ergebnisse der Polymerisationen sind der Tabelle 1 zu entnehmen, wobei Me = Methyl bedeutet.

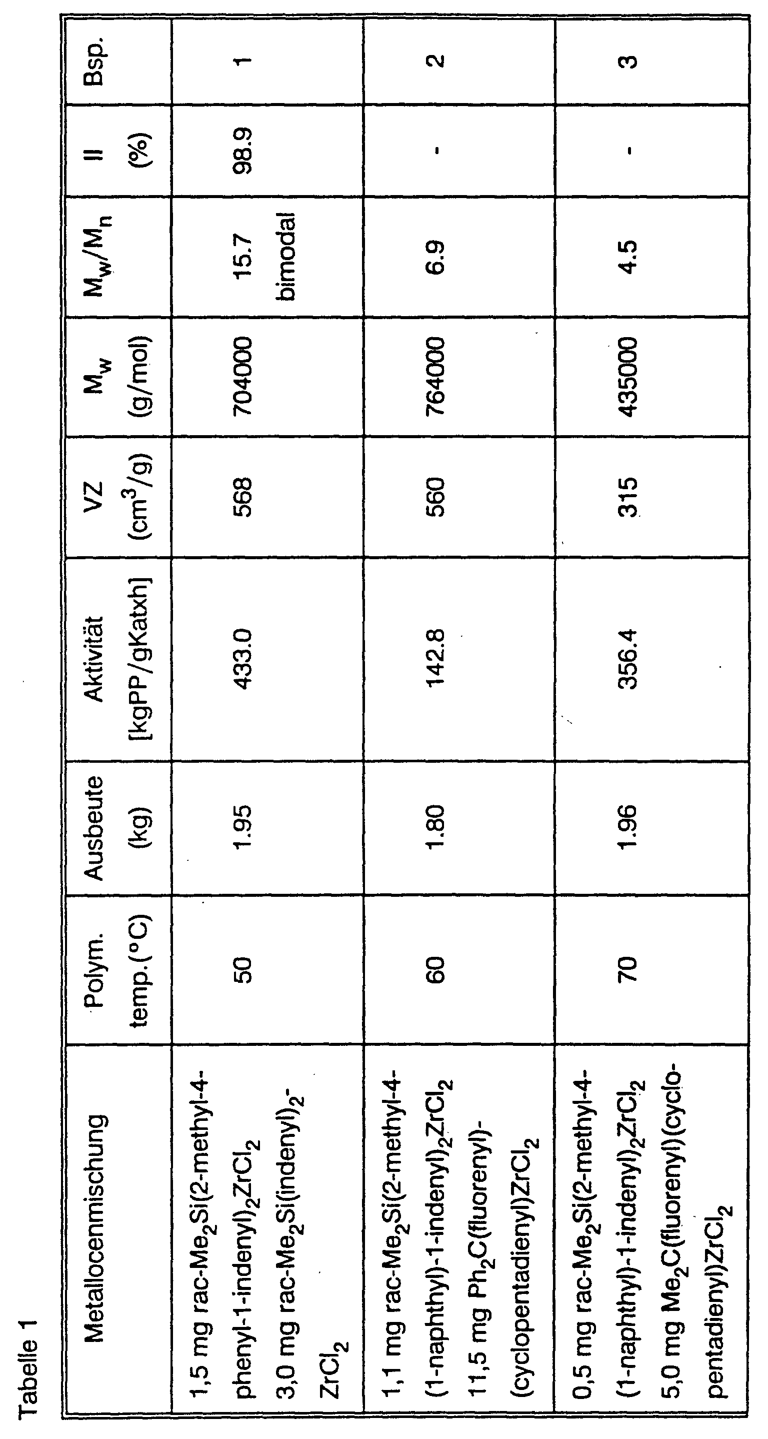

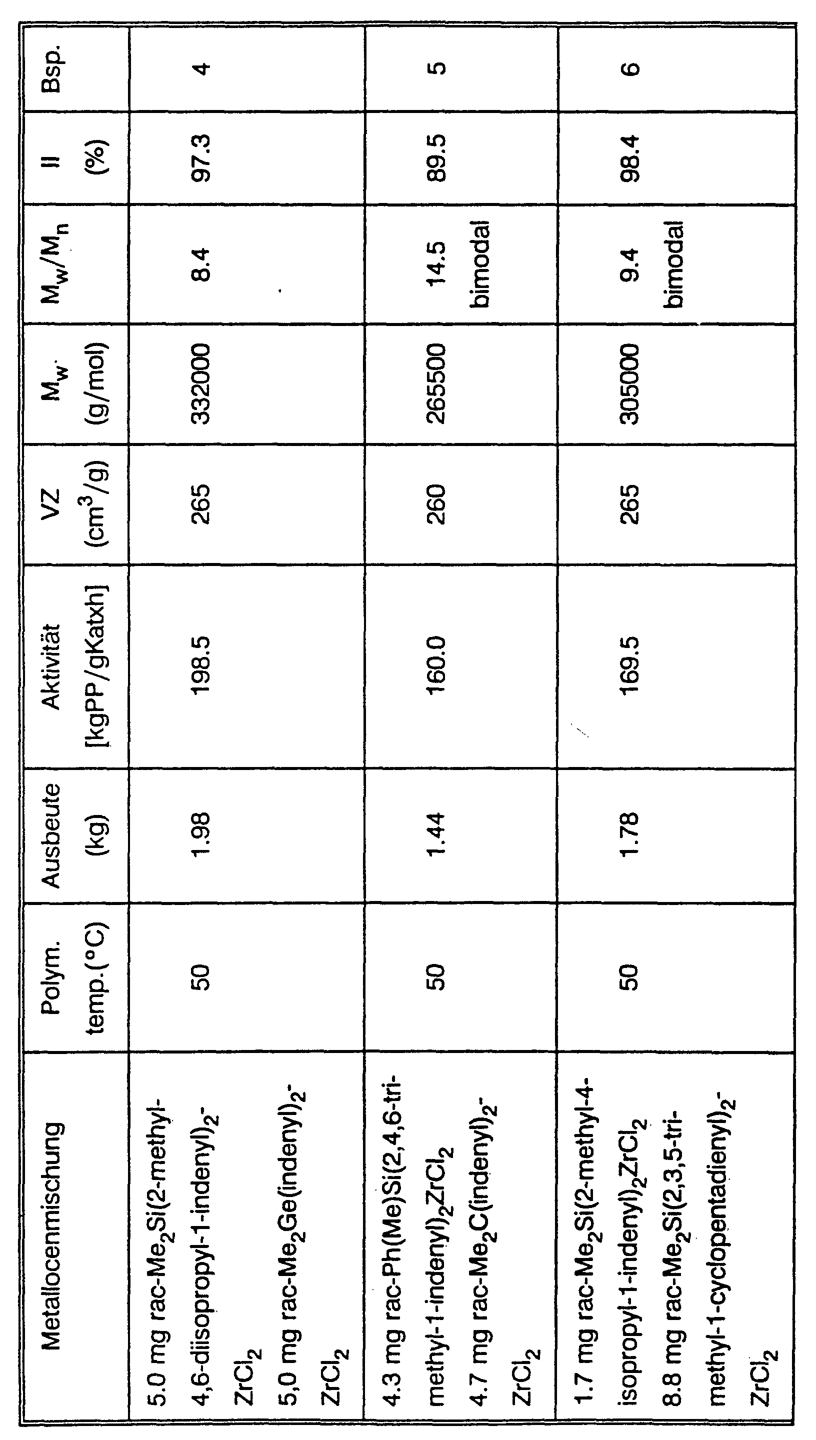

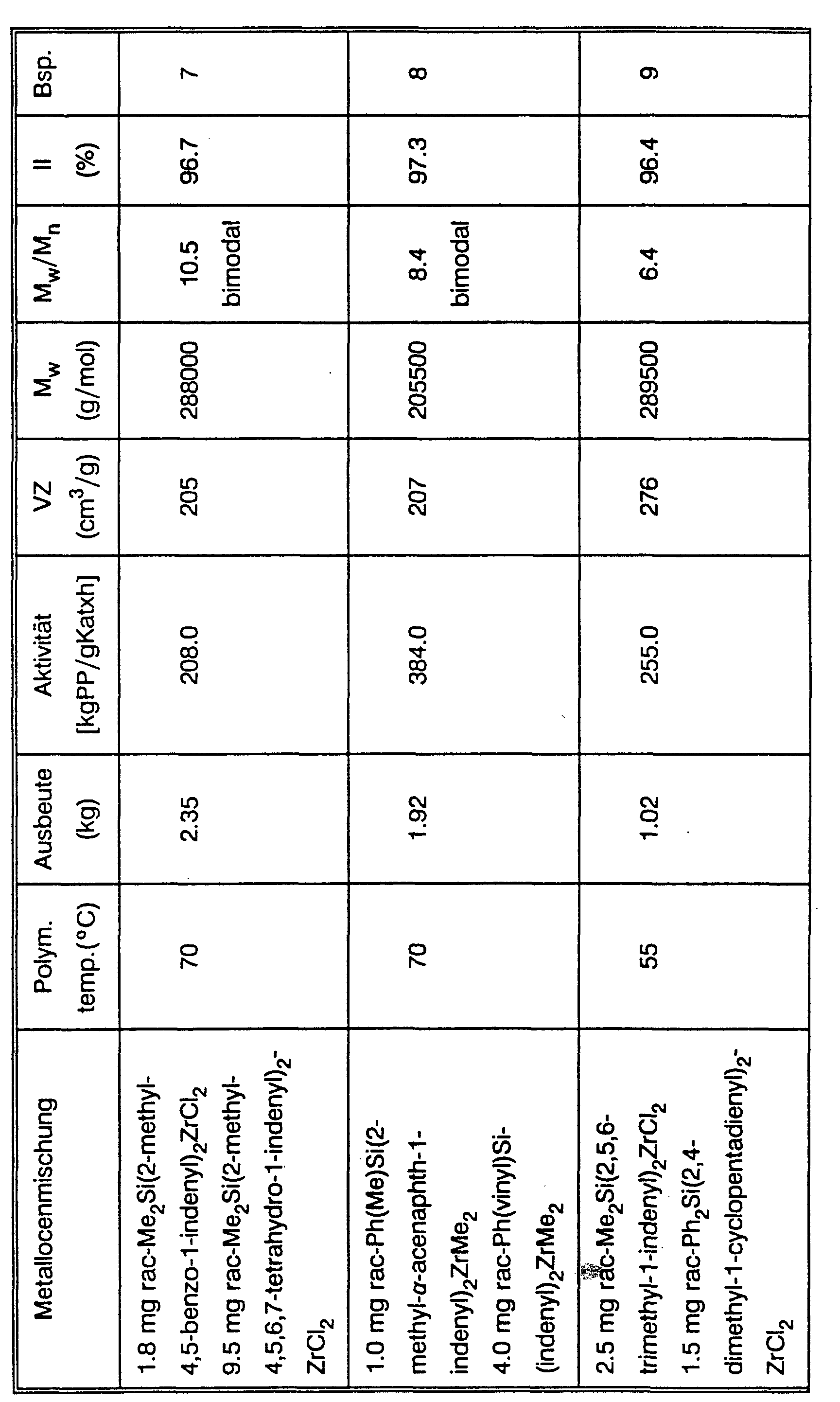

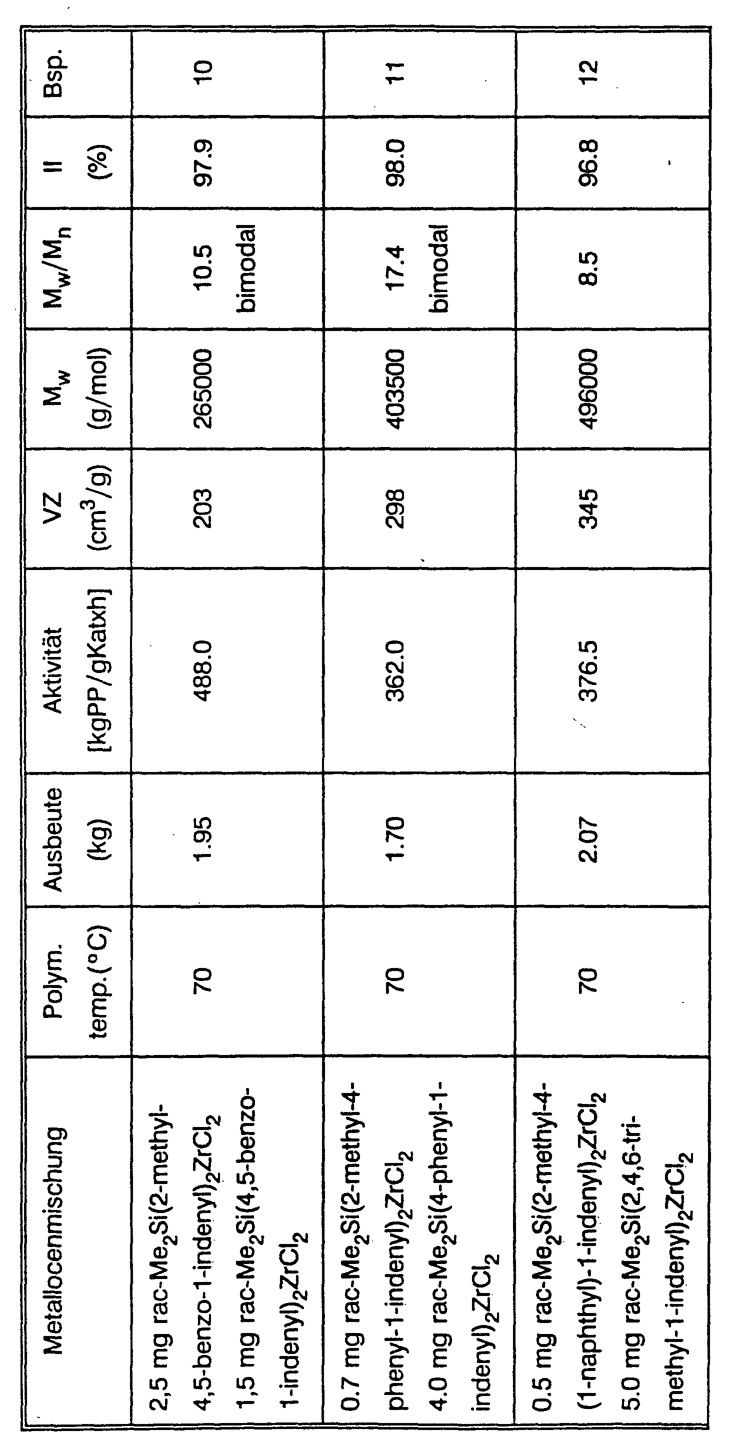

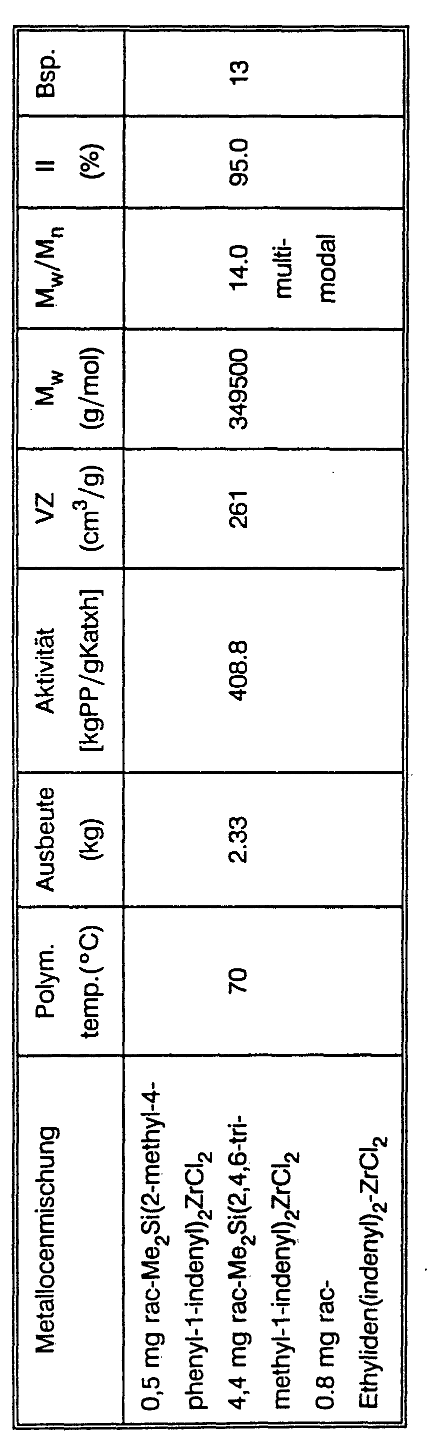

### Beispiel 14

Beispiel 1 wurde wiederholt, vor Zugabe des Propylens wurden jedoch 3 Ndm³ Wasserstoffgas in den Reaktor gegeben.
Es wurden 2.85 kg Polymer erhalten, die Metallocenaktivität war somit 633.3 kg PP/g Kat x h.
VZ = 319 cm³/g; M_{w} = 369000 g/mol, M_{w}/Mₙ = 12.0.
Die Verteilung war bimodal, II = 99.1 %.

### Beispiel 15

Beispiel 1 wurde wiederholt, zusätzlich wurden jedoch während der Polymerisation kontinuierlich 100 g Ethylen zudosiert.
Es wurden 2.24 kg Copolymer erhalten, die Metallocenaktivität war 497.8 kg Copolymer/g Kat x h.
VZ = 269 cm³/g; M_{w} = 305000 g/mol, M_{w}/Mₙ = 9.2.
IR-Spektroskopisch wurden 4.2 Gew.-% Ethylen im Polymer nachgewiesen.

### Beispiel 16

Beispiel 15 wurde wiederholt, 250 g Ethylen wurden jedoch erst nach 30 Minuten in einer Portion zugegeben.
Es wurden 2.05 kg Blockcopolymer erhalten, die Metallocenaktivität war 455.6 kg Copolymer/g Kat x h.
VZ = 279 cm³/g; M_{w} = 268000 g/mol, M_{w}/Mₙ = 7.2.
Ethylengehalt lt. IR-Spektroskopie: 12.1 Gew.-%.

## Patentansprüche

1. Verfahren zur Herstellung eines Polyolefins mit einer Molmassenverteilung M_{w}/Mₙ ≥ 3,0, die monomodal, bimodal oder multimodal sein kann, durch Polymerisation oder Copolymerisation eines Olefins der Formel R^{a}CH=CHR^{b}, worin R^{a} und R^{b} gleich oder verschieden sind und ein Wasserstoffatom oder einen Alkylrest mit 1 bis 14 C-Atomen bedeuten, oder R^{a} und R^{b} mit den sie verbindenden Atomen ein Ringsystem bilden können, bei einer Temperatur von 50 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan der Formel II 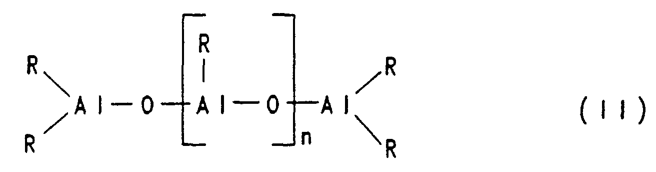 für den linearen Typ und/oder der Formel III 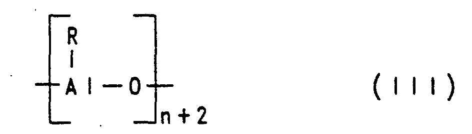 für den cyclischen Typ, wobei in den Formeln II und III die Reste R gleich oder verschieden sein können und eine C₁-C₆-Alkylgruppe, eine C₁-C₆-Fluoralkylgruppe, eine C₆-C₁₈-Arylgruppe, eine C₁-C₆-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AIR₃ besteht, **dadurch gekennzeichnet, daß** als Übergangsmetallkomponente mindestens ein Zirkonocen der Formel I und mindestens ein Zirkonocen der Formel la oder alternativ mindestens 2 Zirkonocene der Formel I verwendet werden, 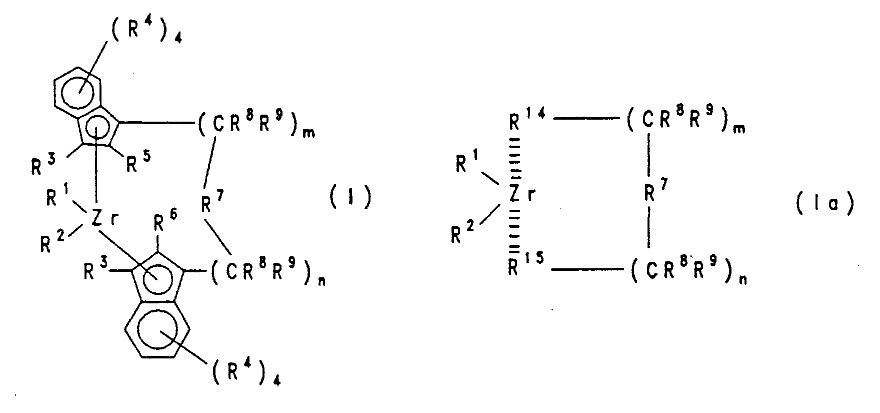 , worin
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ Wasserstoff, ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁴ gleich oder verschieden sind und ein Wasserstoffatom, ein Halogenatom, eine C₁-C₂₀-Alkylgruppe, eine C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe eine C₇-C₄₀-Alkylarylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist, wobei mindestens ein Rest R⁴ pro Indenylring von Wasserstoff verschieden ist, oder zwei oder mehr Reste R⁴ ein Ringsystem mit den sie verbindenden Atomen bilden,
R⁵ und R⁶ gleich oder verschieden sind und ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁷ 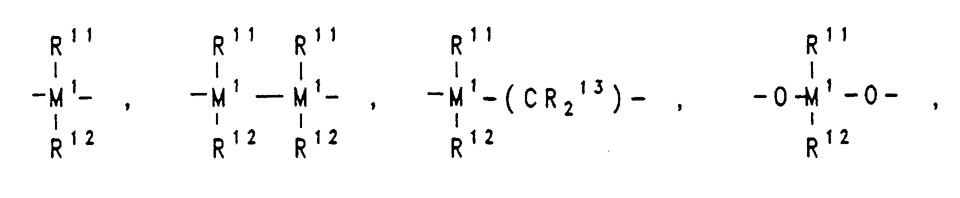 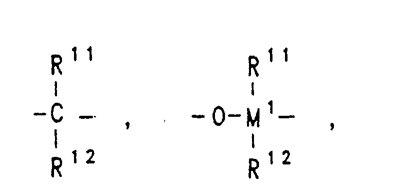 =BR¹¹, =AlR¹¹, -Ge-, -Sn-, -O-, -S-, =SO, =SO₂, =NR¹¹, =CO, =PR¹¹ oder =P(O)R¹¹ ist,
wobei R¹¹, R¹² und R¹³ gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M¹ Silizium, Germanium oder Zinn ist,
R⁸ und R⁹ gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁸ und R⁹ jeweils mit den sie verbindenden Atomen einen Ring bilden,
R¹⁴ und R¹⁵ gleich oder verschieden sind und einen ein- oder mehrkernigen Kohlenwasserstoffrest, welcher mit dem Zirkonatom eine Sandwichstruktur bilden kann, bedeuten und
m und n gleich oder verschieden sind und null, 1 oder 2 sind, wobei m plus n null, 1 oder 2 ist.

2. Verfahren gemäß Anspruch 1, **dadurch gekennzeichnet, daß** in der Formel I R¹ und R² gleich oder verschieden sind und Methyl oder Chlor, R³ Wasserstoff, R⁷ einen Rest 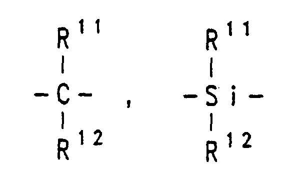 bedeuten und n plus m null oder 1 sind und in Formel la R¹⁴ und R¹⁵ gleich oder verschieden sind und Fluorenyl, Indenyl oder Cyclopentadienyl sind,die auch substituiert sein können.

3. Verfahren gemäß Anspruch 1 oder 2, **dadurch gekennzeichnet, daß** als Verbindung der Formel I,
Dimethylsilandiylbis(2-methyl-4-phenyl-1-indenyl)ZrCl₂,
Phenyl(Methyl)silandiylbis(2-methyl-4-phenyl-1-indenyl)ZrCl₂,
Dimethylsilandiylbis(2-methyl-4-(1-naphthyl)-1-indenyl)ZrCl₂,
Dimethylsilandiylbis(2-methyl-4-(2-naphthyl)-1-indenyl)ZrCl₂,
Dimethylsilandiylbis(2-ethyl-4-(1-naphthyl)-1-indenyl)ZrCl₂,
Dimethylsilandiylbis(2-methyl-4,6-diisopropyl-1-indenyl)ZrCl₂,
Dimethylsilandiylbis(2,4,6-trimethyl-1-indenyl)ZrCl₂,
Phenyl(Methyl)silandiylbis(2-methyl-4,6-diisopropyl-1-indenyl)ZrCl₂,
Phenyl(Methyl)silandiylbis(2,4,6-trimethyl-1-indenyl)ZrCl₂,
1,2-Ethandiylbis(2-methyl-4,6-diisopropyl-1-indenyl)ZrCl₂,
1,2-Butandiylbis(2-methyl-4,6-diisopropyl-1-indenyl)ZrCl₂,
Dimethylsilandiylbis(2-methyl-4-ethyl-1-indenyl)ZrCl₂,
Dimethylsilandiylbis(2-methyl-4-isopropyl-1-indenyl)ZrCl₂,
Dimethylsilandiylbis(2-methyl-4-t-butyl-1-indenyl)ZrCl₂,
Phenyl(Methyl)silandiylbis(2-methyl-4-isopropyl-1-indenyl)ZrCl₂,
Dimethylsilandiylbis(2-ethyl-4-methyl-1-indenyl)ZrCl₂,
Dimethylsilandiylbis(2,4-dimethyl-1-indenyl)ZrCl₂,
Dimethylsilandiylbis(2-methyl-4-ethyl-1-indenyl)ZrCl₂,
Dimethylsilandiylbis(2-methyl-α-acenaphth-1-indenyl)ZrCl₂,
Phenyl(Methyl)silandiylbis(2-methyl-4,5-benzo-1-indenyl)ZrCl₂,
Phenyl(Methyl)silandiylbis(2-methyl-α-acenaphth-1-indenyl)ZrCl₂,
1,2-Ethandiylbis(2-methyl-4,5-benzo-1-indenyl)ZrCl₂,
1,2-Butandiylbis(2-methyl-4,5-benzo-1 -indenyl)ZrCl₂,
Dimethylsilandiylbis(2-methyl-4,5-benzo-1-indenyl)ZrCl₂,
1,2-Butandiylbis(2-ethyl-4-phenyl-1-indenyl)-ZrCl₂,
Dimethylsilandiylbis(2-ethyl-4-phenyl-1-indenyl)ZrCl₂,
Dimethylsilandiylbis(2-methyl-5-isobutyl-1-indenyl)ZrCl₂,
Phenyl(Methyl)silandiylbis(2-methyl-5-isobutyl-1-indenyl)ZrCl₂,
Dimethylsilandiylbis(2-methyl-5-t-butyl-1-indenyl)ZrCl₂,
Dimethylsilandiylbis(2,5,6-trimethyl-1-indenyl)ZrCl₂.

4. Verfahren gemäß einem oder mehreren der Ansprüche 1 bis 3, **dadurch gekennzeichnet, daß** in Formel la R¹ und R² gleich oder verschieden sind und Methyl oder Chlor, R⁷ einen Rest 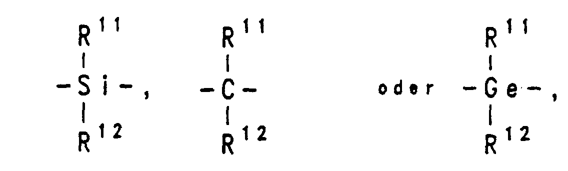 bedeutet und
R¹⁴ und R¹⁵ gleich oder verschieden sind und Fluorenyl, Indenyl oder ein substituiertes Cyclopentadienyl bedeuten.

5. Verfahren gemäß einem oder mehreren der Ansprüche 1 bis 4, **dadurch gekennzeichnet, daß** als Verbindung der Formel la rac-Phenyl(methyl)silyl(indenyl)₂zirkondichlorid, Diphenylmethylen(9-fluorenyl)(cyclopentadienyl)zirkondichlorid, Phenyl(Methyl)methylen(9-fluorenyl)cyclopentadienyl)zirkondichlorid, Isopropyliden(9-fluorenyl)(cyclopentadienyl)zirkondichlorid, rac-Dimethylsilyl(2,3,5-trimethyl-1-cyclopentadienyl)₂zirkondichlorid, rac-Dimethylsilyl(indenyl)₂zirkondichlorid, rac-Dimethylgermyl(indenyl)₂zirkondichlorid, rac-Dimethylsilyl(indenyl)₂zirkondimethyl, rac-Phenyl(vinyl)silyl(indenyl)₂zirkondichlorid, 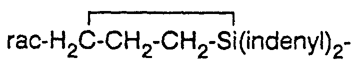 zirkondichlorid, rac-Dimethylsilyl(2,4-dimethylcyclopentadienyl)₂zirkondichlorid, rac-lsopropyliden(indenyl)₂zirkondichlorid, rac-Dimethylsilyl(2-methyl-4,5,6,7-tetrahydro-1-indenyl)₂zirkondichlorid, rac-Ethylen(indenyl)₂zirkondichlorid, rac-Methylen(3-t-butyl-1-cyclopentadienyl)₂zirkondichlorid, rac-Dimethylsilyl(4,7-dimethyl-1-indenyl)2zirkondichlorid, rac-Dimethylsilyl(2-methyl-1-indenyl)2zirkondichlorid, rac-Phenyl(Methyl)silyl(2-methyl-1-indenyl)zirkondichlorid, rac-Dimethylsilyl(2-ethyl-1-indenyl)₂-zirkondichlorid, rac-Dimethylsilyl(4,5-benzo-1-indenyl)₂zirkondichlorid und rac-Dimethylsilyl(4-phenyl-1-indenyl)₂zirkondichlorid verwendet wird.

6. Verfahren gemäß einem oder mehreren der Ansprüche 1 bis 5, **dadurch gekennzeichnet, daß** Propylen polymerisiert wird, oder Propylen und Ethylen copolymerisiert werden.

7. Metallocengemisch, **dadurch gekennzeichnet, daß** es mindestens ein Zirkonocen der Formel I und mindestens ein Zirkonocen der Formel la oder alternativ mindestens 2 Zirkonocene der Formel I enthält 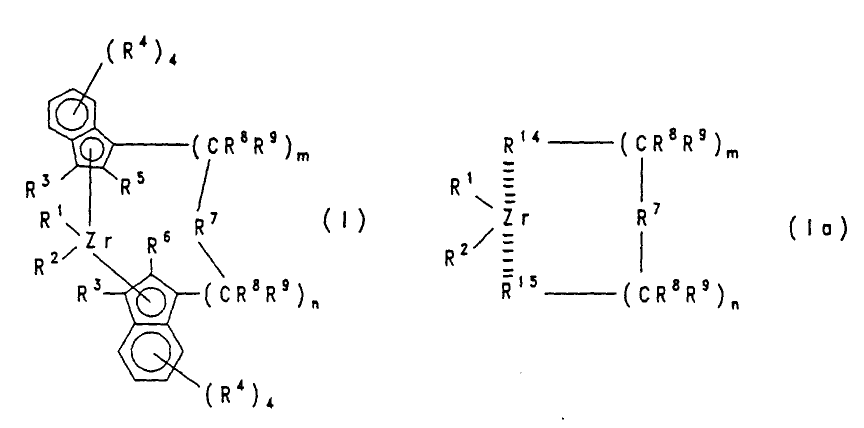 , worin
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ Wasserstoff, ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁴ gleich oder verschieden sind und ein Wasserstoffatom, ein Halogenatom, eine C₁-C₂₀-Alkylgruppe, eine C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist, wobei mindestens ein Rest R⁴ pro Indenylring von Wasserstoff verschieden ist, oder zwei oder mehr Reste R⁴ ein Ringsystem mit den sie verbindenden Atomen bilden,
R⁵ und R⁶ gleich oder verschieden sind und ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁷ 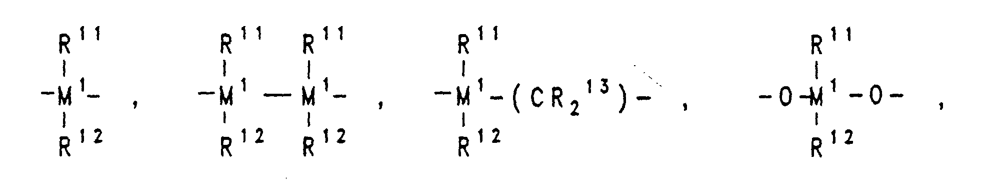 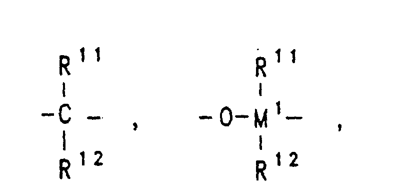 =BR¹¹, =AlR¹¹, -Ge-, -Sn-, -O-, -S-, =SO, =SO₂, =NR¹¹, =CO, =PR¹¹ oder =P(O)R¹¹ ist,
wobei R¹¹, R¹² und R¹³ gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M¹ Silizium, Germanium oder Zinn ist,
R⁸ und R⁹ gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁸ und R⁹ jeweils mit den sie verbindenden Atomen einen Ring bilden,
R¹⁴ und R¹⁵ gleich oder verschieden sind und einen ein- oder mehrkernigen Kohlenwasserstoffrest, welcher mit dem Zirkonatom eine Sandwichstruktur bilden kann, bedeuten und
m und n gleich oder verschieden sind und null, 1 oder 2 sind, wobei m plus n null, 1 oder 2 ist.

8. Metallocengemisch gemäß Anspruch 7, **dadurch gekennzeichnet, daß** in der Formel I R¹ und R² gleich oder verschieden sind und Methyl oder Chlor, R³ Wasserstoff, R⁷ einen Rest 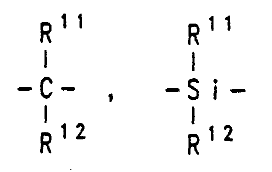 bedeuten und n plus m null oder 1 sind und in Formel la R¹⁴ und R¹⁵ gleich oder verschieden sind und Fluorenyl, Indenyl oder Cyclopentadienyl sind, die auch substituiert sein können.

9. Katalysator, welcher aus einer Übergangsmetallkomponente (Metallocen) und einem Aluminoxan der Formel II 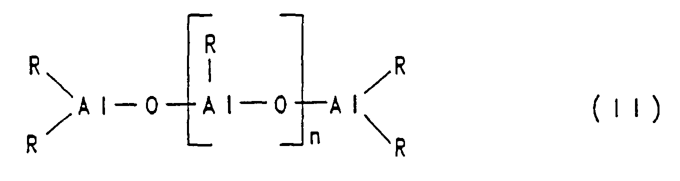 für den linearen Typ und/oder der Formel III 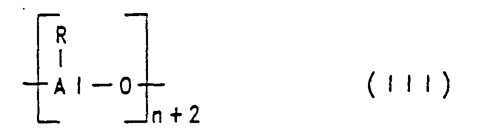 für den cyclischen Typ, wobei in den Formeln II und III die Reste R gleich oder verschieden sein können und eine C₁-C₆-Alkylgruppe, eine C₁-C₆-Fluoralkylgruppe, eine C₆-C₁₈-Arylgruppe, eine C₁-C₆-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung AlR₃ besteht, **dadurch gekennzeichnet, daß** als Übergangsmetallkomponente mindestens ein Zirkonocen der Formel I und mindestens ein Zirkonocen der Formel la oder alternativ mindestens 2 Zirkonocene der Formel I verwendet werden, 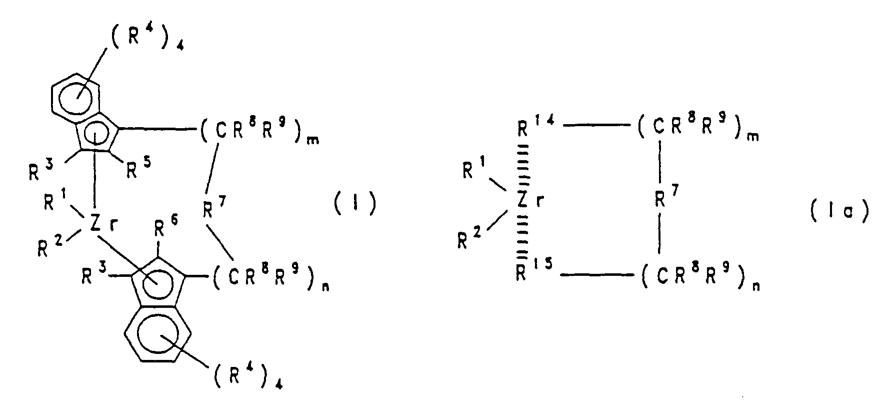 , worin
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³ Wasserstoff, ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁴ gleich oder verschieden sind und ein Wasserstoffatom, ein Halogenatom, eine C₁-C₂₀-Alkylgruppe eine C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe eine C₇-C₄₀-Alkylarylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist, wobei mindestens ein Rest R⁴ pro Indenylring von Wasserstoff verschieden ist, oder zwei oder mehr Reste R⁴ ein Ringsystem mit den sie verbindenden Atomen bilden,
R⁵ und R⁶ gleich oder verschieden sind und ein Halogenatom, eine C₁-C₁₀-Alkylgruppe, die halogeniert sein kann, eine C₆-C₁₀-Arylgruppe, eine C₂-C₁₀-Alkenylgruppe, eine C₇-C₄₀-Arylalkylgruppe, eine C₇-C₄₀-Alkyloxygruppe, eine C₈-C₄₀-Arylalkenylgruppe, einen -NR₂¹⁰, -OR¹⁰, -SR¹⁰, -OSiR₃¹⁰, -SiR₃¹⁰ oder -PR₂¹⁰-Rest bedeuten, worin R¹⁰ ein Halogenatom, eine C₁-C₁₀-Alkylgruppe oder eine C₆-C₁₀-Arylgruppe ist,
R⁷ 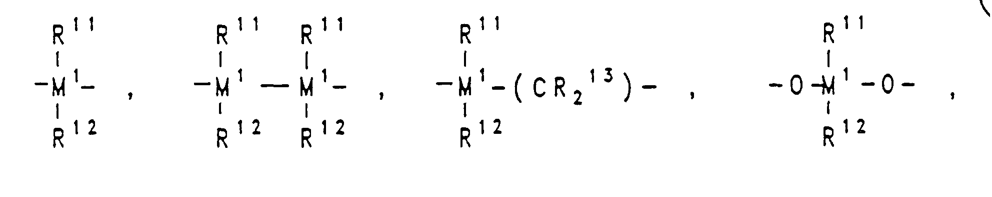 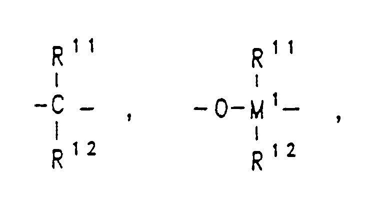 =BR¹¹, =AlR¹¹, -Ge-, -Sn-, -O-, -S-, =SO, =SO₂, =NR¹¹, =CO, =PR¹¹ oder =P(O)R¹¹ ist,
wobei R¹¹, R¹² und R¹³ gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R¹¹ und R¹² oder R¹¹ und R¹³ jeweils mit den sie verbindenden Atomen einen Ring bilden,
M¹ Silizium, Germanium oder Zinn ist,
R⁸ und R⁹ gleich oder verschieden sind und ein Wasserstoffatom, ein Halogenatom, eine C₁-C₂₀-Alkylgruppe, C₁-C₂₀-Fluoralkylgruppe, eine C₆-C₃₀-Arylgruppe, eine C₆-C₃₀-Fluorarylgruppe, eine C₁-C₂₀-Alkoxygruppe, eine C₂-C₂₀-Alkenylgruppe, eine C₇-C₄₀-Arylalkylgruppe, eine C₈-C₄₀-Arylalkenylgruppe, eine C₇-C₄₀-Alkylarylgruppe bedeuten oder R⁸ und R⁹ jeweils mit den sie verbindenden Atomen einen Ring bilden,
R¹⁴ und R¹⁵ gleich oder verschieden sind und einen ein- oder mehrkernigen Kohlenwasserstoffrest, welcher mit dem Zirkonatom eine Sandwichstruktur bilden kann, bedeuten und
m und n gleich oder verschieden sind und null, 1 oder 2 sind, wobei m plus n null, 1 oder 2 ist.

10. Katalysator nach Anspruch 9, enthaltend i) an Stelle eines oder neben einem Aluminoxan eine salzartige Verbindung der Formel RₓNH₄₋ₓBR'₄ oder der Formel R₃PHBR'₄ als Cokatalysator, worin x = 1,2 oder 3, R = Alkyl oder Aryl, gleich oder verschieden, und R' = Aryl, das auch fluoriert oder teilfluoriert sein kann und/oder ii) gegebenenfalls einen Träger.

## Claims

1. A process for preparing a polyolefin having a molecular weight distribution M_{w}/Mₙ ≥ 3.0, which can be monomodal, bimodal or multimodal, by polymerization or copolymerization of an olefin of the formula R^{a}CH = CHR^{b}, where R^{a} and R^{b} are identical or different and are each a hydrogen atom or an alkyl radical having from 1 to 14 carbon atoms, or R^{a} and R^{b} together with the atoms connecting them can form a ring system, at a temperature from 50 to 200°C, at a pressure of from 0.5 to 100 bar, in solution, in suspension or in the gas phase, in the presence of a catalyst which comprises a transition metal component (metallocene) and an aluminoxane of the formula II 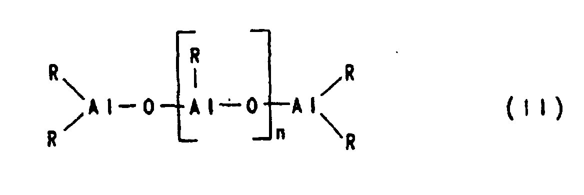 for the linear type and/or the formula III 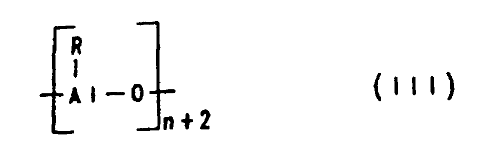 for the cyclic type, where in the formulae II and III the radicals R can be identical or different and are each a C₁-C₆-alkyl group, a C₁-C₆-fluoroalkyl group, a C₆-C₁₈-aryl group, a C₁-C₆-fluoroaryl group or hydrogen and n is an integer from 0 to 50, or, in place of the aluminoxane, comprises a mixture of an aluminoxane of the formula II and/or the formula III with a compound AlR₃, wherein the transition metal component used is at least one zirconocene of the formula I and at least one zirconocene of the formula Ia or alternatively at least 2 zirconocenes of the formula I, 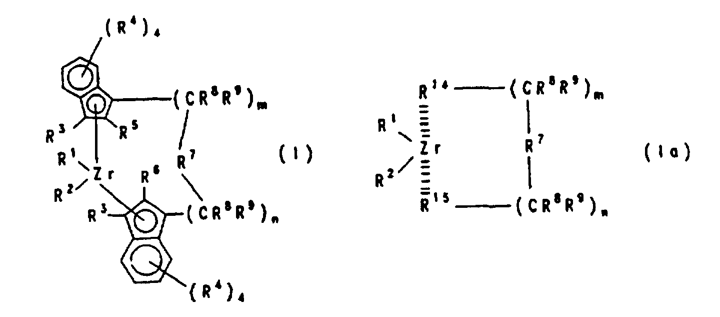 where
R¹ and R² are identical or different and are each a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ is hydrogen, a halogen atom, a C₁-C₁₀-alkyl group which can be halogenated, a C₆-C₁₀-aryl group, a C₂-C₁₀-alkenyl group, a C₇-C₄₀-arylalkyl group, a C₇-C₄₀-alkoxy group, a C₈-C₄₀-arylalkenyl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group,
R⁴ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₄₀-arylalkyl group, a C₈-C₄₀-arylalkenyl group, a C₇-C₄₀-alkylaryl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group, where at least one radical R⁴ per indenyl ring is different from hydrogen, or two or more radicals R4 together with the atoms connecting them form a ring system,
R⁵ and R⁶ are identical or different and are each a halogen atom, a C₁-C₁₀-alkyl group which can be halogenated, a C₆-C₁₀-aryl group, a C₂-C₁₀-alkenyl group, a C₇-C₄₀-arylalkyl group, a C₇-C₄₀-alkoxy group, a C₈-C₄₀-arylalkenyl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group,
R⁷ is 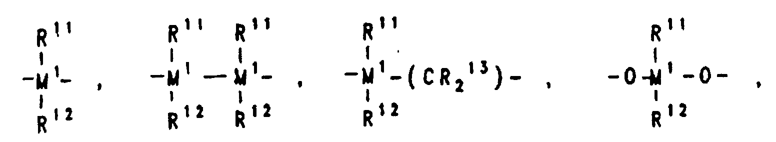 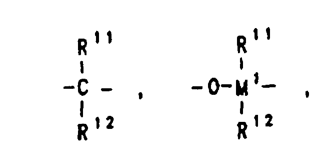 =BR¹¹, =AlR¹¹, -Ge-, -Sn-, -O-, -S-, =SO, =SO₂, =NR¹¹, =CO, =PR¹¹ or =P(O)R¹¹,
where R¹¹, R¹² and R¹³ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₄₀-arylalkyl group, a C₈-C₄₀-arylalkenyl group, a C₇-C₄₀-alkylaryl group, or R¹¹ and R¹² or R¹¹ and R¹³ in each case together with the atoms connecting them form a ring,
M¹ is silicon, germanium or tin,
R⁸ and R⁹ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₂₀-arylalkyl group, a C₈-C₄₀-arylalkenyl group, a C₇-C₄₀-alkylaryl group, or R⁸ and R⁹ together with the atoms connecting them form a ring,
R¹⁴ and R¹⁵ are identical or different and are each a monocyclic or polycyclic hydrocarbon radical which can form a sandwich structure with the zirconium atom and
m and n are identical or different and are zero, 1 or 2, where m plus n is zero, 1 or 2.

2. The process as claimed in claim 1, wherein, in the formula I, R¹ and R² are identical or different and are methyl or chlorine, R³ is hydrogen, R⁷ is a radical 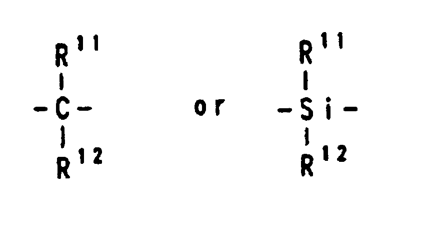 and n plus m is zero or 1 and, in formula Ia, R¹⁴ and R¹⁵ are identical or different and are fluorenyl indenyl or cyclopentadienyl, which can also be substituted.

3. The process as claimed in claim 1 or 2, wherein the compound of the formula I used is
dimethylsilanediyibis(2-methyl-4-phenyl-1-indenyl)ZrCl₂
phenyl(meth)silanediylbis(2-methyl-4-phenyl-1-indenyl)ZrCl₂
dimethylsilanediylbis(2-methyl-4-(1-naphthyl)-1-indenyl)ZrCl₂
dimethylsilanediylbis(2-methyl-4-(2-naphthyl)-1-indenyl)ZrCl₂
dimethylsilanediylbis(2-ethyl-4-(1-naphthyl)-1-indenyl)ZrCl₂
dimethylsilanediylbis(2-methyl-4,6-diisopropyl-1-indenyl)ZrCl₂
dimethylsilanediylbis(2,4,6-trimethyl-1-indenyl)ZrCl₂
phenyl(methyl)silanediylbis(2-methyl-4,6-diisopropyl-1-indenyl)ZrCl₂
phenyl(methyl)silanediylbis(2,4,6-trimethyl-1-indenyl)ZrCl₂
1,2-ethanediylbis(2-methyl-4,6-diisopropyl-1-indenyl)ZrCl₂
1,2-butanediylbis(2-methyl-4,6-diisopropyl-1-indenyl)ZrCl₂
dimethylsilanediylbis(2-methyl-4-ethyl-1-indenyl)ZrCl₂
dimethylsilanediylbis(2-methyl-4-isopropyl-1-indenyl)ZrCl₂
dimethylsilanediylbis(2-methyl-4-t-butyl-1-indenyl)ZrCl₂
phenyl(methyl)silanediylbis(2-methyl-4-isopropyl-1-idenyl)ZrCl₂
dimethylsilanediylbis(2-ethyl-4-methyl-1-indenyl)ZrCl₂
dimethylsilanediylbis(2,4-dimethyl-1-indenyl)ZrCl₂
dimethylsilanediylbis(2-methyl-4-ethyl-1-indenyl)ZrCl₂
dimethylsilanediylbis(2-methyl-α-acenaphth-1-indenyl)ZrCl₂
phenyl(methyl)silanediylbis(2-methyl-4,5-benzo-1-indenyl)ZrCl₂
phenyl(methyl)silanediylbis(2-methyl-a-acenaphth-1-indenyl)ZrCl₂
1,2-ethanediylbis(2-methyl-4,5-benzo-1-indenyl)ZrCl₂
1,2-butanediylbis(2-methyl-4,5-benzo-1-indenyl)ZrCl₂
dimethylsilanediylbis(2-methyl-4,5-benzo-1-indenyl)ZrCl₂
1,2-butanediylbis(2-ethyl-4-phenyl-1-indenyl)ZrCl₂
dimethylsilanediylbis(2-ethyl-4-phenyl-1-indenyl)ZrCl₂
dimethylsilanediylbis(2-methyl-5-isobutyl-1-indenyl)ZrCl₂
phenyl(methyl)silanediylbis(2-methyl-5-isobutyl-1-indenyl)ZrCl₂
dimethylsilanediylbis(2-methyl-5-t-butyl-1-indenyl)ZrCl₂
dimethylsilanediylbis(2,5,6-trimethyl-1-indenyl)ZrCl₂.

4. The process as claimed in one or more of claims 1 to 3, wherein, in formula Ia, R¹ and R² are identical or different and are methyl or chlorine, R⁷ is a radical 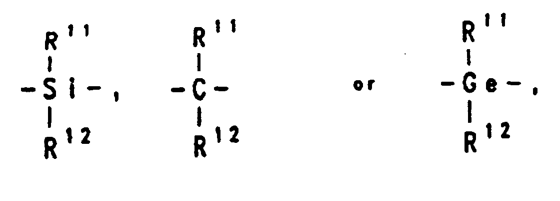 and
R¹⁴ and R¹⁵ are identical or different and are fluorenyl, indenyl or a substituted cyclopentadienyl.

5. The process as claimed in one or more of claims 1 to 4, wherein the compound of the formula Ia used is
rac-phenyl(methyl)silyl(indenyl)₂zirconium dichloride, diphenylmethylene(9-fluorenyl)(cyclopentadienyl)zirconium dichloride, phenyl(methyl)-methylene(9-fluorenyl)(cyclopentadienyl)zirconium dichloride, isopropylidene(9-fluorenyl)(cyclopentadienyl)zirconium dichloride, rac-dimethylsilyl(2,3,5-trimethyl-1-cyclopentadienyl)₂-zirconium dichloride, rac-dimethylsilyl(indenyl)₂-zirconium dichloride, rac-dimethylgermyl(indenyl)₂-zirconium dichloride, rac-[dimethylsilyl-(indenyl)₂]-dimethylzirconium, rac-phenyl(vinyl)-silyl(indenyl)₂-zirconium dichloride, 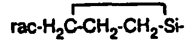 zirconium dichloride, rac-dimethylsilyl(2,4-dimethylcyclopentadienyl)₂zirconium dichloride, rac-isopropylidene(indenyl)₂zirconium dichloride, rac-dimethylsilyl(2-methyl-4,5,6,7-tetrahydro-1-indenyl)₂zirconium dichloride, rac-ethylene-(indenyl)₂zirconium dichloride, rac-methylene(3-t-butyl-1-cyclopentadienyl)₂zirconium dichloride, rac-dimethylsilyl(4,7-dimethyl-1-indenyl)₂zirconium dichloride, rac-dimethylsilyl(2-methyl-1-indenyl)₂-zirconium dichloride, rac-phenyl(methyl)silyl(2-methyl-1-indenyl)zirconium dichloride, rac-dimethylsilyl(2-ethyl-1-indenyl)₂zirconium dichloride, rac-dimethylsilyl(4,5-benzo-1-indenyl)₂zirconium dichloride or rac-dimethylsilyl(4-phenyl-1-indenyl)₂zirconium dichloride.

6. The process as claimed in one or more of claims 1 to 5, wherein propylene is polymerized or propylene and ethylene are copolymerized.

7. A metallocene mixture comprising at least one zirconocene of the formula I and at least one zirconocene of the formula Ia or alternatively at least 2 zirconocenes of the formula I 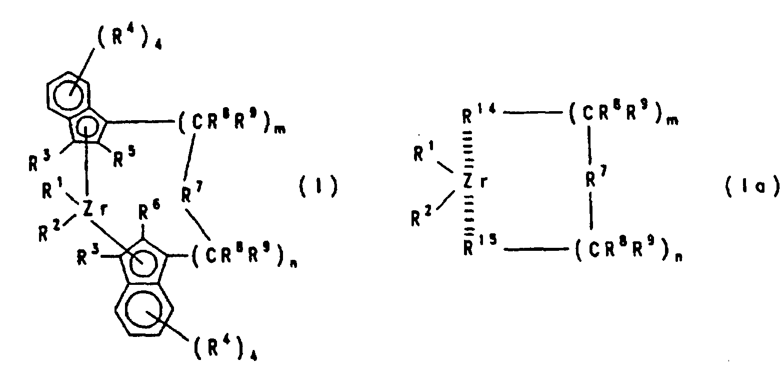 where
R¹ and R² are identical or different and are each a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ is hydrogen, a halogen atom, a C₁-C₁₀-alkyl group which can be halogenated, a C₆-C₁₀-aryl group, a C₂-C₁₀-alkenyl group, a C₇-C₄₀-arylalkyl group, a C₇-C₄₀-alkoxy group, a C₈-C₄₀-arylalkenyl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group,
R⁴ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₄₀-arylalkyl group, a C₈-C₄₀-arylalkenyl group, a C₇-C₄₀-alkylaryl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group, where at least one radical R⁴ per indenyl ring is different from hydrogen, or two or more radicals R⁴ together with the atoms connecting them form a ring system,
R⁵ and R⁶ are identical or different and are each a halogen atom, a C₁-C₁₀-alkyl group which can be halogenated, a C₆-C₁₀-aryl group, a C₂-C₁₀-alkenyl group, a C₇-C₄₀-arylalkyl group, a C₇-C₄₀-alkoxy group, a C₈-C₄₀-arylalkenyl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group,
R⁷ is 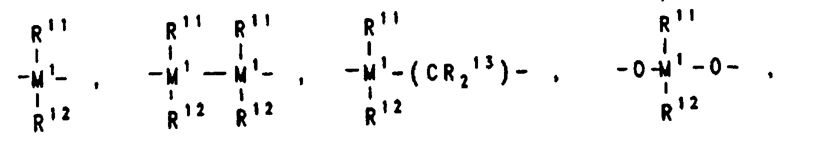 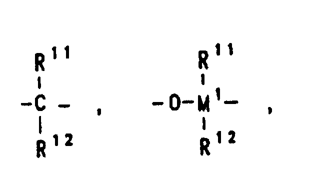 =BR¹¹, =AlR¹¹, -Ge-, -Sn-, -O-, -S-, =SO, =SO₂, =NR¹¹, =CO, =PR¹¹ or =P(O)R¹¹,
where R¹¹, R¹² and R¹³ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₄₀-arylalkyl group, a C₈-C₄₀-arylalkenyl group, a C₇-C₄₀-alkylaryl group, or R¹¹ and R¹² or R¹¹ and R¹³ in each case together with the atoms connecting them form a ring,
M¹ is silicon, germanium or tin,
R⁸ and R⁹ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₂₀-arylalkyl group, a C₈-C₄₀-arylalkenyl group, a C₇-C₄₀-alkylaryl group, or R⁸ and R⁹ together with the atoms connecting them form a ring,
R¹⁴ and R¹⁵ are identical or different and are each a monocyclic or polycyclic hydrocarbon radical which can form a sandwich structure with the zirconium atom and
m and n are identical or different and are zero, 1 or 2, where m plus n is zero, 1 or 2.

8. A metallocene mixture as claimed in claim 7, wherein, in the formula I, R¹ and R² are identical or different and are methyl or chlorine, R³ is hydrogen, R⁷ is a radical 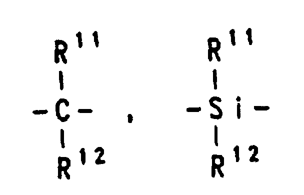 and n plus m is zero or 1, and, in formula Ia, R¹⁴ and R¹⁵ are identical or different and are fluorenyl, indenyl or cyclopentadienyl, which can also be substituted.

9. A catalyst which comprises a transition metal component (metallocene) and an aluminoxane of the formula II 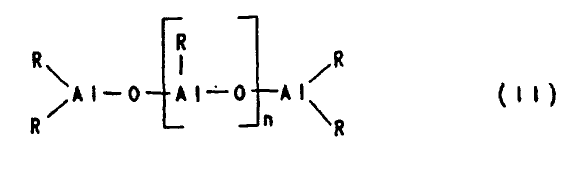 for the linear type and/or the formula III 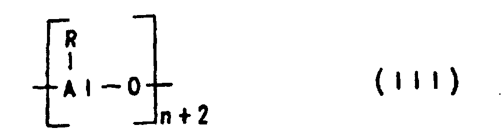 for the cyclic type, where in the formulae II and III the radicals R can be identical or different and are each a C₁-C₆-alkyl group, a C₁-C₆-fluoroalkyl group, a C₆-C₁₈-aryl group, a C₁-C₆-fluoroaryl group or hydrogen and n is an integer from 0 to 50, or, in place of the aluminoxane, comprises a mixture of an aluminoxane of the formula II and/or the formula III with a compound AlR₃, wherein the transition metal component used is at least one zirconocene of the formula I and at least one zirconocene of the formula Ia or alternatively at least 2 zirconocenes of the formula I, 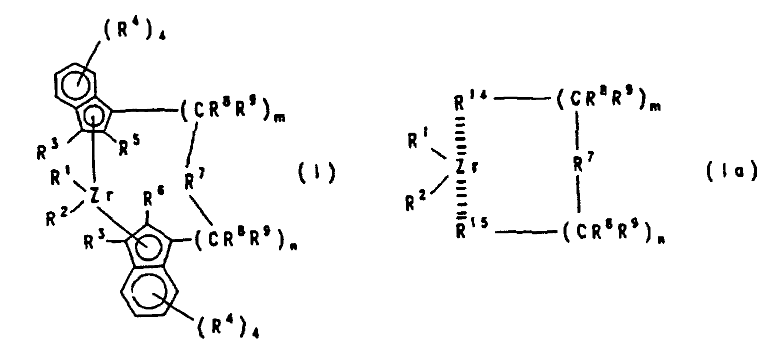 where
R¹ and R² are identical or different and are each a hydrogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group, a C₈-C₄₀-arylalkenyl group or a halogen atom,
R³ is hydrogen, a halogen atom, a C₁-C₁₀-alkyl group which can be halogenated, a C₆-C₁₀-aryl group, a C₂-C₁₀-alkenyl group, a C₇-C₄₀-arylalkyl group, a C₇-C₄₀-alkoxy group, a C₈-C₄₀-arylalkenyl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group,
R⁴ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₄₀-arylalkyl group, a C₈-C₄₀-arylalkenyl group, a C₇-C₄₀-alkylaryl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group, where at least one radical R⁴ per indenyl ring is different from hydrogen, or two or more radicals R⁴ together with the atoms connecting them form a ring system,
R⁵ and R⁶ are identical or different and are each a halogen atom, a C₁-C₁₀-alkyl group which can be halogenated, a C₆-C₁₀-aryl group, a C₂-C₁₀-alkenyl group, a C₇-C₄₀-arylalkyl group, a C₇-C₄₀-alkoxy group, a C₈-C₄₀-arylalkenyl group, a -NR₂¹⁰, -OR¹⁰, -SR¹⁰, -OSiR₃¹⁰, -SiR₃¹⁰ or -PR₂¹⁰ radical, where R¹⁰ is a halogen atom, a C₁-C₁₀-alkyl group or a C₆-C₁₀-aryl group,
R⁷ is 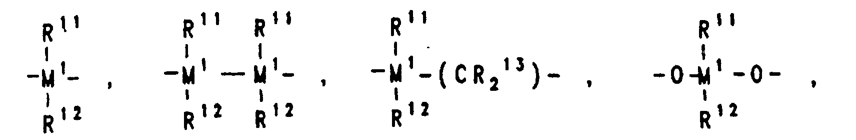 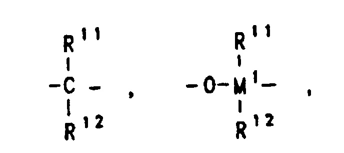 =BR¹¹, =AlR¹¹, -Ge-, -Sn-, -O-, -S-, =SO, =SO₂, =NR¹¹, =CO, =PR¹¹ or =P(O)R¹¹,
where R¹¹, R¹² and R¹³ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₄₀-arylalkyl group, a C₈-C₄₀-arylalkenyl group, a C₇-C₄₀-alkylaryl group, or R¹¹ and R¹² or R¹¹ and R¹³ in each case together with the atoms connecting them form a ring,
M¹ is silicon, germanium or tin,
R⁸ and R⁹ are identical or different and are each a hydrogen atom, a halogen atom, a C₁-C₂₀-alkyl group, a C₁-C₂₀-fluoroalkyl group, a C₆-C₃₀-aryl group, a C₆-C₃₀-fluoroaryl group, a C₁-C₂₀-alkoxy group, a C₂-C₂₀-alkenyl group, a C₇-C₂₀-arylalkyl group, a C₈-C₄₀-arylalkenyl group, a C₇-C₄₀-alkylaryl group, or R⁸ and R⁹ together with the atoms connecting them form a ring,
R¹⁴ and R¹⁵ are identical or different and are each a monocyclic or polycyclic hydrocarbon radical which can form a sandwich structure with the zirconium atom and
m and n are identical or different and are zero, 1 or 2, where m plus n is zero, 1 or 2.

10. A catalyst as claimed in claim 9 comprising i) in place of or in addition to an aluminoxane, a salt-like compound of the formula RₓNH₄₋ₓBR'₄ or the formula R₃PHBR'₄ as cocatalyst, where x=1, 2 or 3, R = alkyl or aryl, identical or different, and R' = aryl which can also be fluorinated or partially fluorinated, and/or ii), if desired, a support.

## Revendications

1. Procédé de préparation d'une polyoléfine ayant une répartition des masses moléculaires M_{w}/Mₙ ≥ 3,0, qui peut être monomodale, bimodale ou multimodale, par polymérisation ou copolymérisation d'une oléfine de formule R^{a}CH=CHR^{b}, où R^{a} et R^{b} sont identiques ou différents et représentent chacun un atome d'hydrogène ou un radical alkyle ayant de 1 à 14 atomes de carbone, ou encore R^{a} et R^{b}, avec les atomes qui les relient, peuvent former un système cyclique, à une température de 50 à 200°C, sous une pression de 0,5 à 100 bar, en solution, en suspension ou en phase gazeuse, en présence d'un catalyseur, qui est constitué d'un composant à base d'un métal de transition (métallocène) et d'un aluminoxane de formule II 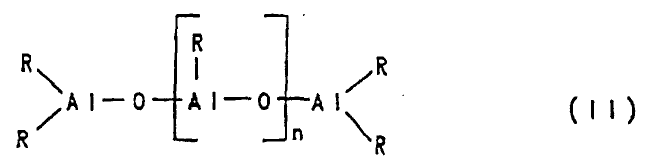 pour le type linéaire, et/ou de formule III 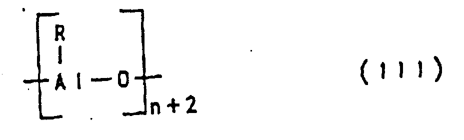 pour le type cyclique, où, dans les formules II et III, les radicaux R peuvent être identiques ou différents et représentent chacun un groupe alkyle en C₁-C₆, un groupe fluoralkyle en C₁-C₆, un groupe aryle en C₆-C₁₈, un groupe fluoraryle en C₁-C₆ ou un atome d'hydrogène, et n est un nombre entier de 0 à 50, ou encore, au lieu de l'aluminoxane, d'un mélange d'un aluminoxane de formule II et/ou de formule III et d'un composé AlR₃, **caractérisé en ce qu'**on utilise en tant que composant à base d'un métal de transition au moins un zirconocène de formule I et au moins un zirconocène de formule Ia, ou encore au moins 2 zirconocènes de formule I 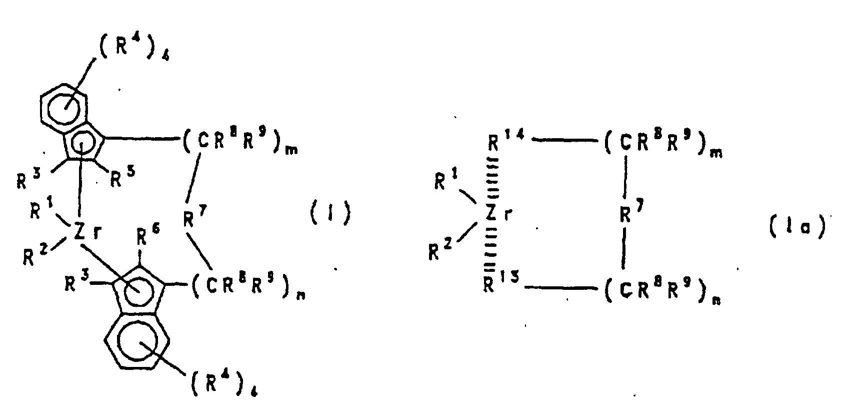 où
R¹ et R² sont identiques ou différents et représentent chacun un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'hydrogène,
R³ est un atome d'hydrogène, un atome d'halogène, un groupe alkyle en C₁-C₁₀ pouvant être halogéné, un groupe aryle en C₆-C₁₀, un groupe alcényle en C₂-C₁₀, un groupe arylalkyle en C₇-C₄₀, un groupe alkyloxy en C₇-C₄₀, un groupe arylalcényle en C₈-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀,
les radicaux R⁴ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀, où au moins un radical R⁴ par noyau indényle est différent de l'hydrogène, ou encore au moins deux radicaux R⁴ forment un système cyclique avec les atomes qui les relient,
R⁵ et R⁶ sont identiques ou différents et représentent chacun un atome d'halogène, un groupe alkyle en C₁-C₁₀ pouvant être halogéné, un groupe aryle en C₆-C₁₀, un groupe alcényle en C₂-C₁₀, un groupe arylalkyle en C₇-C₄₀, un groupe alkyloxy en C₇-C₄₀, un groupe arylalcényle en C₈-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀,
R⁷ est 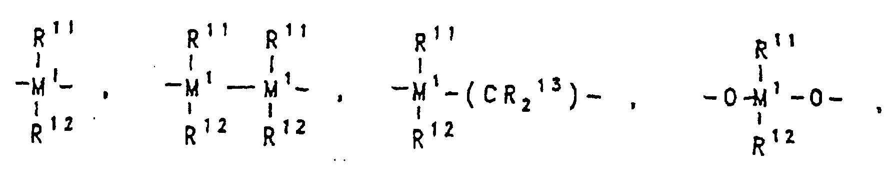 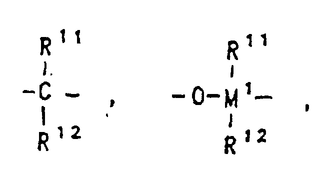 =BR¹¹, =AlR¹¹, -Ge-, -Sn-, -O-, -S-, =SO, =SO₂, =NR¹¹, =CO, =PR¹¹ ou =P(O)R¹¹,
où R¹¹, R¹² et R¹³ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀ ou encore les couples R¹¹ et R¹², ou R¹¹ et R¹³, forment chacun un cycle avec les atomes qui les relient,
M¹ est le silicium, le germanium ou l'étain,
R⁸ et R⁹ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀, ou encore R⁸ et R⁹, avec les atomes qui les relient, forment un cycle,
R¹⁴ et R¹⁵ sont identiques ou différents et représentent chacun un radical hydrocarboné à un ou plusieurs noyaux, qui avec l'atome de zirconium peut former une structure sandwich, et
m et n sont identiques ou différents et valent chacun zéro, 1 ou 2, m plus n valant zéro, 1 ou 2.

2. Procédé selon la revendication 1, **caractérisé en ce que**, dans la formule I, R¹ et R² sont identiques ou différents et représentent chacun le groupe méthyle ou chloro, R³ est un atome d'hydrogène, R⁷ est un radical 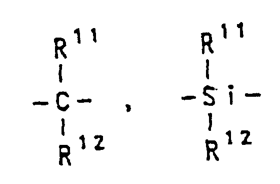 et n plus m vaut zéro ou 1, et, dans la formule Ia, R¹⁴ et R¹⁵ sont identiques ou différents et représentent chacun un groupe fluorényle, indényle ou cyclopentadiényle, qui peut aussi être substitué.

3. Procédé selon la revendication 1 ou 2, **caractérisé en ce qu'**on utilise, en tant que composé de formule I, les composés suivants :
diméfhylsilanediylbis(2-méthyl-4-phényl-1-indényl)ZrCl₂,
phényl(méthyl)silanediylbis(2-méthyl-4-phényl-1-indényl)ZrCl₂,
diméthylsilanediylbis(2-méthyl-4-(1-,naphtl)-1-indényl)ZrCl₂,
diméthylsilanediylbis(2-méthyl-4-(2-naphtyl)-1-indényl)ZrCl₂,
diméthylsilanediylbis(2-éthyl-4-(1-naphtyl)-1-indényl)ZrCl₂,
diméthylsilanediylbis(2-méthyl-4,6-diisopropyl-1-indényl)ZrCl₂,
diméthylsilanediylbis(2,4,6-triméthyl-1-indényl)ZrCl₂,
phényl(méthyl)silanediylbis(2-méthyl-4,6-diisopropyl-1-indényl)ZrCl₂,
phényl(méthyl)silanediylbis(2,4,6-triméthyl-1-indényl)ZrCl₂,
1,2-éthanediylbis(2-méthyl-4,6-diisopropyl-1-indényl)ZrCl₂,
1,2-butanediylbis(2-méthyl-4,6-diisopropyl-1-indényl)ZrCl₂,
diméthylsilanediylbis(2-méthyl-4-éthyl-1-indényl)ZrCl₂,
diméthylsilanediylbis(2-méthyl-4-isopropyl-1-indényl)ZrCl₂,
diméthylsilanediylbis(2-méthyl-4-tert-butyl-1-indényl)ZrCl₂,
phényl(méthyl)silanediylbis(2-méthyl-4-isopropyl-1-indényl)ZrCl₂,
diméthylsilanediylbis(2-éthyl-4-méthyl-1-indényl)ZrCl₂,
diméthylsilanediylbis(2,4-diméthyl-1-indényl)ZrCl₂,
diméthylsilanediylbis(2-méthyl-4-éthyl-1-indényl)ZrCl₂,
diméthylsilanediylbis(2-méthyl-α-acénaphth-1-indényl)ZrCl₂,
phényl(méthyl)silanediylbis(2-méthyl-4,5-benzo-1-indényl)ZrCl₂,
phényl(méthyl)silanediylbis(2-méthyl-α-acénaphth-1-indényl)ZrCl₂,
1,2-éthanediylbis(2-méthyl-4,5-benzo-1-indényl)ZrCl₂,
1,2-butanediylbis(2-méthyl-4,5-benzo-1-indényl)ZrCl₂,
diméthylsilanediylbis(2-méthyl-4,5-benzo-1-indényl)ZrCl₂,
1,2-butanediylbis(2-éthyl-4-phényl-1-indényl)-ZrCl₂,
diméthylsilanediylbis(2-éthyl-4-phényl-1-indényl)ZrCl₂,
diméthylsilanediylbis(2-méthyl-5-isobutyl-1-indényl)ZrCl₂,
phényl(méthyl)silanediylbis(2-méthyl-5-isobutyl-1-indényl)ZrCl₂,
diméthylsilanediylbis(2-méthyl-5-tert-butyl-1-indényl)ZrCl₂,
diméthylsilanediylbis(2,5,6-triméthyl-1-indényl)ZrCl₂

4. Procédé selon l'une ou plusieurs des revendications 1 à 3, **caractérisé en ce que**, dans la formule la, R¹ et R² sont identiques ou différents et représentent chacun le groupe méthyle ou chloro, R⁷ est un radical 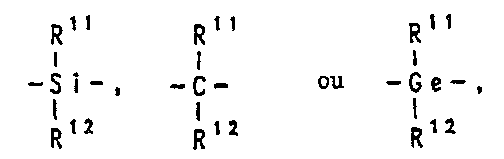 et
R¹⁴ et R¹⁵ sont identiques ou différents et représentent chacun un groupe fluorényle, indényle, ou encore cyclopentadiényle substitué.

5. Procédé selon l'une ou plusieurs des revendications 1 à 4, **caractérisé en ce qu'**on utilise en tant que composé de formule Ia le dichlorure de rac-phényl(méthyl)silyl(indényl)₂zirconium, le dichlorure de diphénylméthylène(9-fluorényl)(cyclopentadiényl)zirconium, le dichlorure de phényl(méthyl)-méthylène(9-fluorényl)(cyclopentadiényl)zirconium, le dichlorure d'isopropylidène(9-fluorényl)(cyclopentadiényl)zirconium, le dichlorure de rac-diméthylsilyl(2,3,5-triméthyl-1-cyclopentadiényl)₂zirconium, le dichlorure de rac-diméthylsilyl(indényl)₂zirconium, le dichlorure de rac-diméthylgermyl-(indényl)₂zirconium, le dichlorure de rac-diméthylsilyl(indényl)₂zirconium, le dichlorure de rac-phényl(vinyl)silyl(indényl)₂zirconium, le dichlorure de rac- 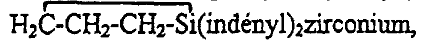 le dichlorure de rac-diméthylsilyl(2,4-diméthylcyclopentadiényl)₂zirconium, le dichlorure de rac-isopropylidène-(indényl)₂zirconium, le dichlorure de rac-diméthylsilyl(2-méthyl-4,5,6,7-tétrahydro-1-indényl)₂zirconium, le dichlorure de rac-éthylène(indényl)₂-zirconium, le dichlorure de rac-méthylène(3-tert-butyl-1-cyclopentadiényl)₂-zirconium, le dichlorure de rac-diméthylsilyl(4,7-diméthyl-1-indényl)₂-zirconium, le dichlorure de rac-diméthylsilyl(2-méthyl-1-indényl)₂zirconium, le dichlorure de rac-phényl(méthyl)silyl(2-méthyl-1-indényl)zirconium, le dichlorure de rac-diméthylsilyl(2-éthyl-1-indényl)₂zirconium, le dichlorure de rac-dimélhylsilyl(4,5-benzo-1-indényl)₂zirconium et dichlorure de rac-diméthylsilyl(4-phenyl-1-indényl)₂zirconium.

6. Procédé selon l'une ou plusieurs des revendications 1 à 5, **caractérisé en ce qu'**on polymérise du propylène ou que l'on copolymérise du propylène et de l'éthylène.

7. Mélange de métallocènes, **caractérisé en ce qu'**il contient au moins un zirconocène de formule I et au moins un zirconocène de formule la, ou encore au moins 2 zirconocènes de formule I 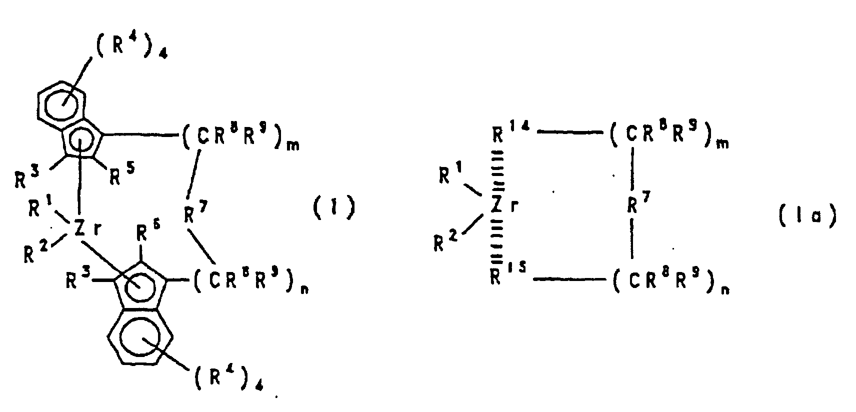 où
R¹ et R² sont identiques ou différents et représentent chacun un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'hydrogène,
R³ est un atome d'hydrogène, un atome d'halogène, un groupe alkyle en C₁-C₁₀ pouvant être halogéné, un groupe aryle en C₆-C₁₀, un groupe alcényle en C₂-C₁₀, un groupe arylalkyle en C₇-C₄₀, un groupe alkyloxy en C₇-C₄₀, un groupe arylalcényle en C₈-C₄₀, un radical -NR₂¹⁰, -OR¹⁰, -SR¹⁰, -OSiR₃¹⁰ ou -PR₂¹⁰, où R¹⁰ est un atome d'halogène, un groupe alkyle en C₁-C₁₀ ou un groupe aryle en C₆-C₁₀,
les radicaux R⁴ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀, où au moins un radical R⁴ par noyau indényle est différent de l'hydrogène, ou encore au moins deux radicaux R⁴ forment un système cyclique avec les atomes qui les relient,
R⁵ et R⁶ sont identiques ou différents et représentent chacun un atome d'halogène, un groupe alkyle en C₁-C₁₀ pouvant être halogéné, un groupe aryle en C₆-C₁₀, un groupe alcényle en C₂-C₁₀, un groupe arylalkyle en C₇-C₄₀, un groupe alkyloxy en C₇-C₄₀, un groupe arylalcényle en C₈-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀,
R⁷ est 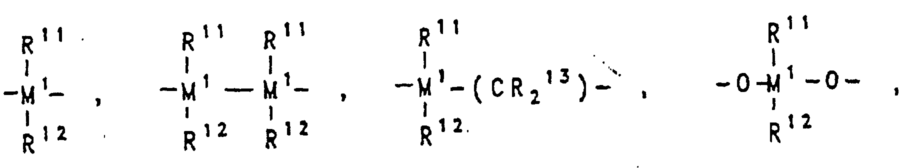 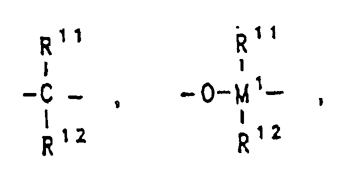 =BR¹¹, =AlR¹¹, -Ge-, -Sn-, -O-, -S-, =SO, =SO₂, =NR¹¹, =CO, =PR¹¹ ou =P(O)R¹¹,
où R¹¹, R¹² et R¹³ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀ ou encore les couples R¹¹ et R¹², ou R¹¹ et R¹³, forment chacun un cycle avec les atomes qui les relient,
M¹ est le silicium, le germanium ou l'étain,
R⁸ et R⁹ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀, ou encore R⁸ et R⁹, avec les atomes qui les relient, forment un cycle,
R¹⁴ et R¹⁵ sont identiques ou différents et représentent chacun un radical hydrocarboné à un ou plusieurs noyaux, qui avec l'atome de zirconium peut former une structure sandwich, et
m et n sont identiques ou différents et valent chacun zéro, 1 ou 2, m plus n valant zéro, 1 ou 2.

8. Mélange de métallocènes selon la revendication 7, **caractérisé en ce que**, dans la formule I, R¹ et R² sont identiques ou différents et représentent chacun un groupe méthyle ou chloro, R³ est un atome d'hydrogène, R⁷ est un radical 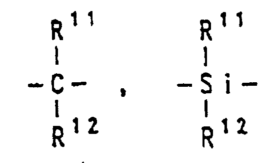 et n plus m vaut zéro ou 1, et, dans la formule Ia, R¹⁴ et R¹⁵ sont identiques ou différents et représentent chacun un groupe fluorényle, indényle ou cyclopentadiényle, qui peut aussi être substitué.

9. Catalyseur, qui est constitué d'un composant à base d'un métal de transition (métallocène) et d'un aluminoxane de formule II 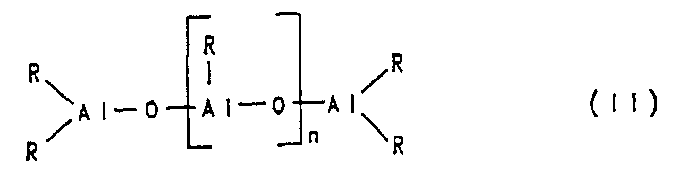 pour le type linéaire, et/ou de formule III 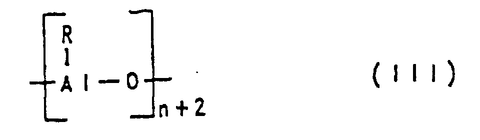 pour le type cyclique, où, dans les formules II et III, les radicaux R peuvent être identiques ou différents et représentent chacun un groupe alkyle en C₁-C₆, un groupe fluoralkyle en C₁-C₆, un groupe aryle en C₆-C₁₈, un groupe fluoraryle en C₁-C₆ ou un atome d'hydrogène, et n est un nombre entier de 0 à 50, ou encore, au lieu de l'aluminoxane, d'un mélange d'un aluminoxane de formule II et/ou de formule III et d'un composé AlR₃, **caractérisé en ce qu'**on utilise en tant que composant à base d'un métal de transition au moins un zirconocène de formule I et au moins un zirconocène de formule Ia, ou encore au moins 2 zirconocènes de formule I 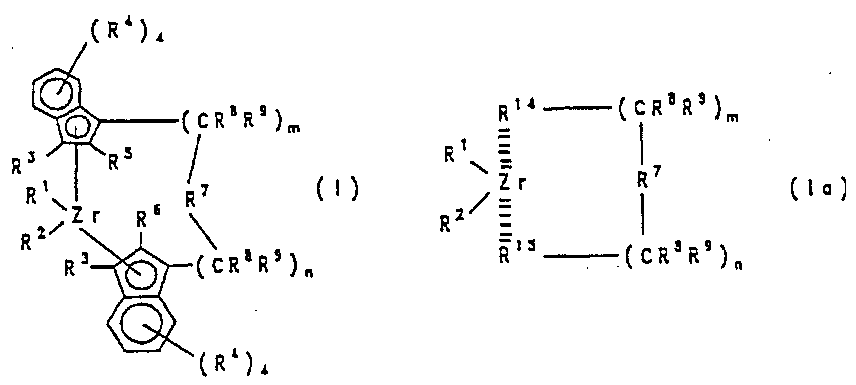 où
R¹ et R² sont identiques ou différents et représentent chacun un atome d'hydrogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀, un groupe arylalcényle en C₈-C₄₀ ou un atome d'hydrogène,
R³ est un atome d'hydrogène, un atome d'halogène, un groupe alkyle en C₁-C₁₀ pouvant être halogéné, un groupe aryle en C₆-C₁₀, un groupe alcényle en C₂-C₁₀, un groupe arylalkyle en C₇-C₄₀, un groupe alkyloxy en C₇-C₄₀, un groupe arylalcényle en C₈-C₄₀, un radical -NR₂¹⁰, -OR¹⁰, -SR¹⁰, -OSiR₃¹⁰ ou -PR₂¹⁰, où R¹⁰ est un atome d'halogène, un groupe alkyle en C₁-C₁₀ ou un groupe aryle en C₆-C₁₀,
les radicaux R⁴ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀, où au moins un radical R⁴ par noyau indényle est différent de l'hydrogène, ou encore au moins deux radicaux R⁴ forment un système cyclique avec les atomes qui les relient,
R⁵ et R⁶ sont identiques ou différents et représentent chacun un atome d'halogène, un groupe alkyle en C₁-C₁₀ pouvant être halogéné, un groupe aryle en C₆-C₁₀, un groupe alcényle en C₂-C₁₀, un groupe arylalkyle en C₇-C₄₀, un groupe alkyloxy en C₇-C₄₀, un groupe arylalcényle en C₈-C₄₀, un radical -NR₂¹⁰, -OR¹⁰, -SR¹⁰, -OSiR₃¹⁰, -SiR₃¹⁰ ou -PR₂¹⁰, où R¹⁰ est un atome d'halogène, un groupe alkyle en C₁-C₁₀ ou un groupe aryle en C₆-C₁₀,
R⁷ est 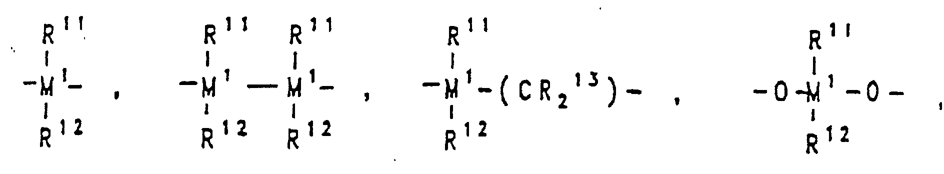 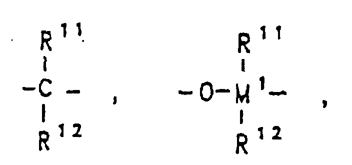 =BR¹¹, =AlR¹¹, -Ge-, -Sn-, -O-, -S-, =SO, =SO_{2,} =NR¹¹, =CO, =PR¹¹ ou =P(O)R¹¹,
où R¹¹, R¹² et R¹³ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀ ou encore les couples R¹¹ et R¹², ou R¹¹ et R¹³, forment chacun un cycle avec les atomes qui les relient,
M¹ est le silicium, le germanium ou l'étain,
R⁸ et R⁹ sont identiques ou différents et représentent chacun un atome d'hydrogène, un atome d'halogène, un groupe alkyle en C₁-C₂₀, un groupe fluoralkyle en C₁-C₂₀, un groupe aryle en C₆-C₃₀, un groupe fluoraryle en C₆-C₃₀, un groupe alcoxy en C₁-C₂₀, un groupe alcényle en C₂-C₂₀, un groupe arylalkyle en C₇-C₄₀, un groupe arylalcényle en C₈-C₄₀, un groupe alkylaryle en C₇-C₄₀, ou encore R⁸ et R⁹, avec les atomes qui les relient, forment un cycle,
R¹⁴ et R¹⁵ sont identiques ou différents et représentent chacun un radical hydrocarboné à un ou plusieurs noyaux, qui avec l'atome de zirconium peut former une structure sandwich, et
m et n sont identiques ou différents et valent chacun zéro, 1 ou 2, m plus n valant zéro, 1 ou 2.

10. Catalyseur selon la revendication 9, contenant i) au lieu ou en plus d'un aluminoxane, un composé de type sel de formule RₓNH₄₋ₓBR'₄ ou de formule R₃PHBR'₄ en tant que catalyseur, où x = 1, 2 ou 3, les radicaux R sont des groupes alkyle ou aryle qui sont identiques ou différents, et R' est un groupe aryle, qui peut aussi être fluoré ou partiellement fluoré, et/ou ii) éventuellement un support.
